# EUROPEAN PATENT APPLICATION

(11) **EP 4 130 842 A1**
(43) Date of publication of application: **08.02.2023**
(21) Application number: 21779247.2
(22) Date of filing: 10.03.2021
(51) Int. Cl.: G02B 21/36, G01N 21/27, G02B 21/22

(54) **MICROSCOPE SYSTEM, PROJECTION UNIT, AND EGG TESTING ASSISTANCE METHOD**

(30) Priority: 31.03.2020 JP 2020063283
(71) Applicant: Evident Corporation, Nagano 399-0495 (JP)
(72) Inventor: YAMANE, Takuto, Hachioji-shi, Tokyo 192-8507 (JP); HATTORI, Toshiyuki, Hachioji-shi, Tokyo 192-8507 (JP); KANEKI, Shinsuke, Hachioji-shi, Tokyo 192-8507 (JP); OHARA, Yuta, Hachioji-shi, Tokyo 192-8507 (JP)
(74) Representative: Gunzelmann, Rainer
(86) International application number: PCT/JP2021/009684
(87) International publication number: WO 2021/200002

(57) **Abstract**

A microscopic system 1 includes a microscope 10, an image capturing device 15 configured to acquire a captured image of a follicular fluid 50 accommodated in a container 40 placed on a stage 11, an image processing device 100 configured to generate an auxiliary image including information to determine a region where presence of an egg is estimated based on the captured image acquired by the image capturing device 15, and a projection device 17 that is a superimposition device configured to superimpose the auxiliary image generated by the image processing device 100 on an optical image of the follicular fluid 50 formed on an image surface on an optical path of the microscope 10.

## Description

### Technical Field

The disclosure of this specification relates to a microscopic system, a projection unit, and an egg testing support method.

### Background Art

Nowadays with the progress of late marriage and late birth, the number of patients who receive infertility treatment is increasing year by year. The demand for assisted reproductive technology (ART) is also increasing.

ART is a general term for techniques for in vitro fertilizing an egg and a sperm taken out from a human, such as in vitro fertilization (IVF) and micro-insemination represented by intracytoplasmic sperm injection (ICSI), and is distinguished from general artificial insemination, in which a collected sperm is injected into the uterus and fertilized with an egg in the body.

The technique related to ART is described in, for example, Patent Literature 1. Patent Literature 1 describes a microscope suitable for micro-insemination, which is a kind of ART.

### Citation List

### Patent Literature

Patent Literature 1: WO 2012/150689 A

### Summary of Invention

### Technical Problem

Now, in ART in which an egg and a sperm are fertilized in vitro, it is necessary to take out the egg from the mother's body in advance. Therefore, the work in which a doctor collects a follicular fluid from the follicle in the ovary (this is called egg collection) and an embryo cultivator finds and collects an egg from the collected follicular fluid (this is called egg testing) is performed.

For egg collection, a patient needs to go to a medical institution. Furthermore, at the medical institution, an egg collection needle is punctured from the vagina into the ovary, thereby collecting a follicular fluid from the ovary. In this way, egg collection imposes a heavy physical and mental burden on the patient. In addition, the number of eggs that can be collected by one egg collection is also limited. Therefore, an egg is valuable to an infertility treatment patient, and the medical institution is required to collect an egg from the follicular fluid collected during egg collection without overlooking the egg.

Meanwhile, it is not easy to find and collect an egg in the follicular fluid collected during egg collection without overlooking the egg. This is because the follicular fluid collected from the follicles contains various cells other than eggs. Therefore, it is not always easy for even a skilled person to correctly recognize and collect an egg, and it is a difficult work for an inexperienced embryo cultivator.

Since a stereoscopic microscope is used for egg testing, the follicular fluid containing an egg is taken out of an incubator during egg testing and exposed to an indoor atmosphere. Since the period of exposure of the egg is preferably short, the embryo cultivator is required to perform egg testing as quickly and reliably as possible.

Based on the above circumstances, an object of one aspect of the present invention is to provide a technique for supporting the search for an egg in egg testing.

### Solution to Problem

A microscopic system according to one aspect of the present invention includes: a microscope; an image capturing device configured to acquire a captured image of a follicular fluid accommodated in a container placed on a stage of the microscope; an image processing device configured to generate an auxiliary image including information to determine a region where presence of an egg is estimated based on the captured image acquired by the image capturing device; and a superimposition device configured to superimpose the auxiliary image generated by the image processing device on an optical image of the follicular fluid formed on an image surface on an optical path of the microscope.

A projection unit according to one aspect of the present invention is a projection unit to be used by being attached to a microscope and includes: an image processing device configured to generate an auxiliary image including information to determine a region where presence of an egg is estimated based on a captured image of a follicular fluid accommodated in a container placed on a stage of the microscope; and a superimposition device configured to superimpose the auxiliary image generated by the image processing device on an optical image of the follicular fluid formed on an image surface on an optical path of the microscope.

An egg testing support method according to one aspect of the present invention includes: acquiring a captured image of a follicular fluid accommodated in a container placed on a stage of a microscope; generating an auxiliary image including information to determine a region where presence of an egg is estimated based on the captured image acquired by the image capturing device; and superimposing the generated auxiliary image on an optical image of the follicular fluid formed on an image surface on an optical path of the microscope.

### Advantageous Effects of Invention

The above-described aspects can support the search for an egg in egg testing.

### Brief Description of Drawings

FIG. 1 is a diagram showing a configuration of a microscopic system 1.
FIG. 2 is a diagram illustrating a configuration of an image processing device 100.
FIG. 3 is a diagram illustrating a configuration of an optical system of a microscope 10.
FIG. 4 is a flowchart showing one example of learning processing according to a first embodiment.
FIG. 5 is a diagram showing one example of a learning dataset creation screen.
FIG. 6 is a diagram illustrating an image included in the learning dataset.
FIG. 7 is a flowchart showing one example of egg testing support processing according to the first embodiment.
FIG. 8 is a flowchart showing one example of auxiliary image generation processing according to the first embodiment.
FIG. 9 is one example of an image seen from an eyepiece 19.
FIG. 10 is another example of the image seen from the eyepiece 19.
FIG. 11 is a flowchart showing one example of auxiliary image generation processing according to a second embodiment.
FIG. 12 is still another example of an image seen from an eyepiece 19.
FIG. 13 is a flowchart showing one example of auxiliary image generation processing according to a third embodiment.
FIG. 14 is still another example of an image seen from an eyepiece 19.
FIG. 15 is a diagram showing another example of a learning dataset creation screen.
FIG. 16 is a diagram showing still another example of the learning dataset creation screen.
FIG. 17 is a flowchart showing one example of auxiliary image generation processing according to a fourth embodiment.
FIG. 18 is still another example of an image seen from an eyepiece 19.
FIG. 19 is a flowchart showing one example of auxiliary image generation processing according to a fifth embodiment.
FIG. 20 is still another example of an image seen from an eyepiece 19.
FIG. 21 is still another example of the image seen from the eyepiece 19.
FIG. 22 is a diagram showing a configuration of a microscopic system 2.
FIG. 23 is a flowchart showing one example of egg testing support processing according to a sixth embodiment.
FIG. 24 is a diagram showing a configuration of a microscopic system 3.
FIG. 25 is a flowchart showing one example of egg testing support processing according to a seventh embodiment.
FIG. 26 is still another example of an image seen from an eyepiece 19.
FIG. 27 is a flowchart showing one example of auxiliary image generation processing according to an eighth embodiment.
FIG. 28 is still another example of an image seen from an eyepiece 19.
FIG. 29 is a diagram showing a configuration of a microscopic system 4.
FIG. 30 is a flowchart showing one example of egg testing support processing according to a ninth embodiment.
FIG. 31 is still another example of an image seen from an eyepiece 19.
FIG. 32 is a diagram showing a configuration of a microscopic system 5.
FIG. 33 is a flowchart showing one example of egg testing support processing according to a tenth embodiment.
FIG. 34 is still another example of an image seen from an eyepiece 19.
FIG. 35 is a diagram showing a configuration of a microscopic system 6.
FIG. 36 is a flowchart showing one example of auxiliary image generation processing according to an eleventh embodiment.
FIG. 37 is still another example of an image seen from an eyepiece 19.
FIG. 38 is still another example of the image seen from the eyepiece 19.
FIG. 39 is still another example of the image seen from the eyepiece 19.
FIG. 40 is a diagram showing a configuration of a microscopic system 7.
FIG. 41 is a diagram showing a configuration of a microscopic system 8.

### Description of Embodiments

### [First Embodiment]

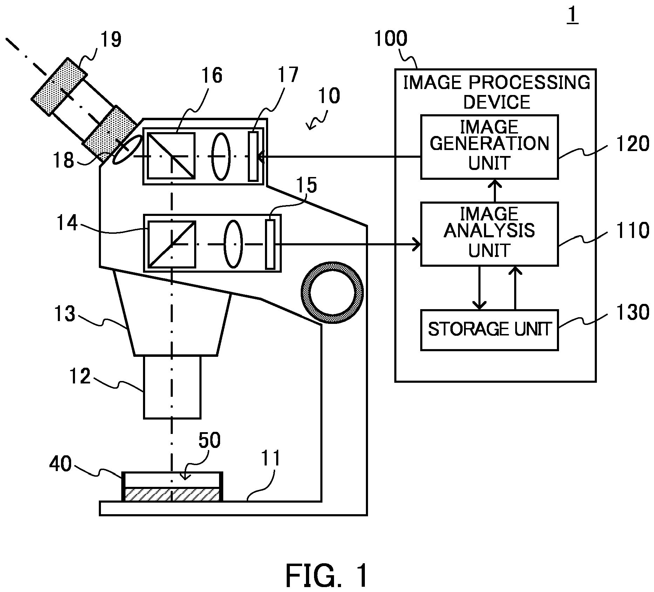

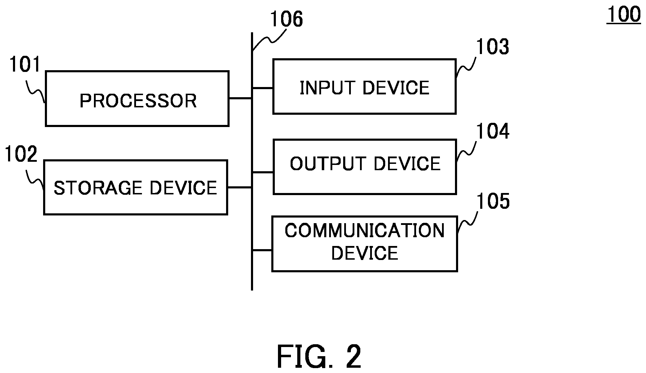

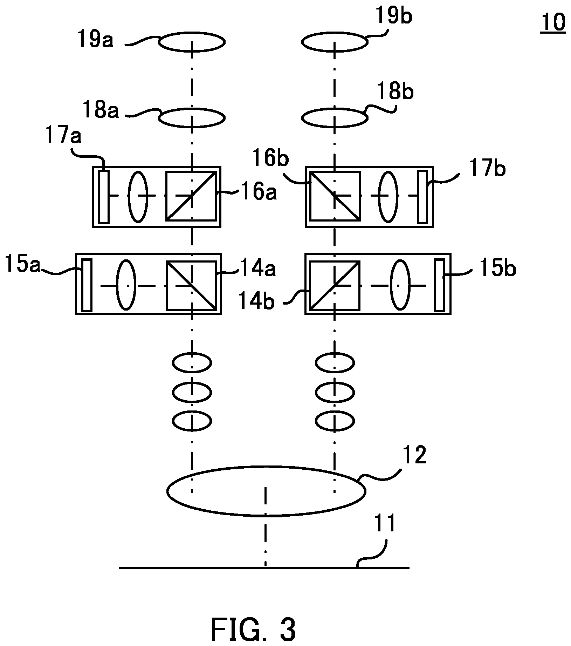

FIG. 1 is a diagram showing a configuration of a microscopic system 1. FIG. 2 is a diagram illustrating a configuration of an image processing device 100. FIG. 3 is a diagram illustrating a configuration of an optical system of a microscope 10. The microscopic system 1 is a system for observing a sample by looking into an eyepiece 19. The sample to be observed by the microscopic system 1 is, for example, a follicular fluid 50 accommodated in a container 40. The microscopic system 1 is used, for example, for egg testing, which is one step of infertility treatment.

The microscopic system 1 includes at least the microscope 10, an image capturing device 15, a projection device 17, which is one example of superimposition device, and the image processing device 100. The microscopic system 1 projects an auxiliary image by using the projection device 17 on an image surface where an optical image of the follicular fluid 50 is formed with the optical system of the microscope 10 to superimpose the auxiliary image on the optical image. The auxiliary image includes information for determining a region where the presence of an egg is estimated (hereinafter referred to as estimated region). Note that the auxiliary image is created by the image processing device 100 based on a captured image of the follicular fluid captured by the image capturing device 15.

This allows a user of the microscopic system 1 who is looking into the eyepiece 19 and observing the follicular fluid to keep eyes on the eyepiece 19 and obtain information about the estimated region, making it possible to find an egg relatively easily in a short time. Therefore, the microscopic system 1 can support the work of searching for an egg in egg testing of the user.

A specific example of the configuration of the microscopic system 1 will be described below with reference to FIGS. 1 to 3. The microscopic system 1 includes, as shown in FIG. 1, the microscope 10 including the image capturing device 15 and the projection device 17, and the image processing device 100.

The microscope 10 includes a stage 11 on which the container 40 accommodating the follicular fluid 50 is placed, an objective 12 mounted on a nosepiece 13, a tube lens 18, and the eyepiece 19. The objective 12 and the tube lens 18 form the optical image of the follicular fluid 50 on the image surface. The eyepiece 19 further magnifies the optical image formed on the image surface. The user of the microscopic system 1 observes a magnified virtual image of the optical image by using the eyepiece 19.

The microscope 10 also includes a splitter 14 placed on an optical path between the objective 12 and the tube lens 18, and the image capturing device 15 placed on an optical path that branches off the splitter 14. The splitter 14 is, for example, a half mirror, but a variable beam splitter that varies the transmittance and the reflectance may be used. The image capturing device 15 is, for example, a digital camera including an imaging element, and acquires the captured image of the follicular fluid 50. The imaging element is, for example, a two-dimensional image sensor such as a CCD image sensor or a CMOS image sensor.

The microscope 10 further includes a splitter 16 placed on the optical path between the objective 12 and the tube lens 18, and the projection device 17 placed on an optical path that branches off the splitter 16. The splitter 16 is, for example, a half mirror, but a variable beam splitter that varies the transmittance and the reflectance may be used. The projection device 17 is, for example, a projector using a reflective liquid crystal device, a projector using a transmissive liquid crystal device, a projector using a digital mirror device, and the like. The projection device 17 projects the auxiliary image generated by the image processing device 100 onto the image surface on the optical path of the microscope 10. Note that the projection device 17 is one example of a superimposition device that projects the auxiliary image onto the image surface to superimpose the auxiliary image on the optical image of the follicular fluid 50 formed on the image surface.

The image processing device 100 generates the auxiliary image based on the captured image acquired by the image capturing device 15. The image processing device 100 includes an image analysis unit 110, an image generation unit 120, and a storage unit 130 as functional components related to the generation of auxiliary image.

The image analysis unit 110 performs image analysis on the captured image including object detection of an egg. Specifically, the image analysis unit 110 performs object detection, for example, using a learned model stored in the storage unit 130. Algorithm of the learned model is not particularly limited, but may be, for example, a deep learning model such as SSD, YOLO, and FasterR-CNN.

The image generation unit 120 generates the auxiliary image including information for determining the region where the presence of an egg is estimated (estimated region) based on a result of the image analysis by the image analysis unit 110. Specifically, the image generation unit 120 generates an image including a bounding box in the estimated region as an auxiliary image.

The storage unit 130 stores the learned model that has learned the position of an egg with respect to an input image. That is, the learned model detects an object classified as an egg and outputs at least positional information on the egg. More specifically, the learned model outputs the positional information on the egg and probability of classification (classification confidence) indicating the probability of egg

The image processing device 100 may be a general-purpose computer or a dedicated computer. The image processing device 100 is not particularly limited to this configuration, but may have, for example, the physical configuration as shown in FIG. 2. Specifically, the image processing device 100 may include a processor 101, a storage device 102, an input device 103, an output device 104, and a communication device 105, and these units may be connected to each other by a bus 106.

The processor 101 may include hardware, and the hardware may include, for example, at least one of a circuit for processing a digital signal and a circuit for processing an analog signal. The processor 101 can include, for example, one or more circuit devices (for example, ICs) or one or more circuit elements (for example, resistors or capacitors) on a circuit board. The processor 101 may be a central processing unit (CPU). In addition, as the processor 101, various types of processors including a graphics processing unit (GPU) and a digital signal processor (DSP) may be used. The processor 101 may be a hardware circuit including an application specific integrated circuit (ASIC) or a field-programmable gate array (FPGA). The processor 101 can include an amplifier circuit, a filter circuit, or the like that processes an analog signal. By executing a program stored in the storage device 102, the processor 101 functions as the image analysis unit 110 and the image generation unit 120 described above.

The storage device 102 may include a memory and/or another storage device. The memory may be, for example, a random access memory (RAM). The memory may be a semiconductor memory such as a static randam access memory (SRAM) or a dynamic random access memory (DRAM). The storage device 102 may be, for example, a register, a magnetic storage device such as a hard disk device, an optical storage device such as an optical disk device, an internal or external hard disk drive, a solid state storage device, a CD-ROM, a DVD, another optical or magnetic disk storage device, or another storage device. The storage device 102 stores the program executed by the processor 101, the learned model, and other data, and functions as the storage unit 130 described above. Note that the storage device 102 is one example of a non-transitory computer-readable storage medium.

The input device 103 is a device operated by the user of the microscopic system 1 (for example, embryo cultivator). The input device 103 is, for example, a keyboard, a mouse, a touch panel, a voice input device, a foot pedal, or the like, and outputs an operation signal corresponding to the operation into the input device 103 to the processor 101.

The output device 104 is, for example, a display device such as a liquid crystal display, a plasma display, an organic EL display, a CRT display, or an LED matrix panel. The output device 104 may further include a voice output device such as a speaker that outputs voice, a light emitting device such as a lamp or a light that outputs a light beam, a vibration device such as a vibrator that outputs vibration, and the like.

The communication device 105 is a device that exchanges data with the microscope 10 and other devices. The communication device 105 may be a communication device that exchanges data by wire, or may be a communication device that exchanges data wirelessly. The program or learned model stored in the storage device 102 may be acquired by the communication device 105 from another device via the Internet.

Note that the egg testing performed using the microscope 10 is work performed by the embryo cultivator while looking into the eyepiece 19 at a relatively low observation magnification. Therefore, the microscope 10 is preferably a stereoscopic microscope that enables observation of an object three-dimensionally at a low magnification. More specifically, for example, as shown in FIG. 3, the microscope 10 is preferably a binocular stereoscopic microscope including: a left-eye system including a splitter 14a, an image capturing device 15a, a splitter 16a, a projection device 17a, a tube lens 18a, and an eyepiece 19a; and a right-eye system including a splitter 14b, an image capturing device 15b, a splitter 16b, a projection device 17b, a tube lens 18b, and an eyepiece 19b.

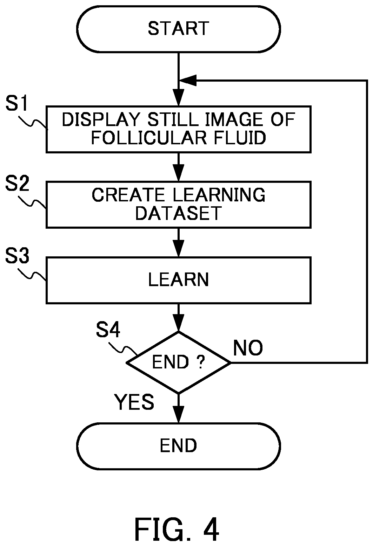

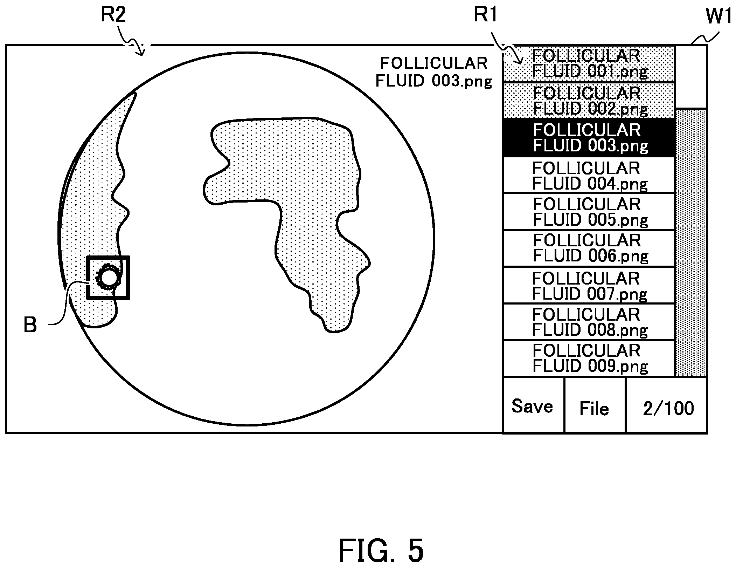

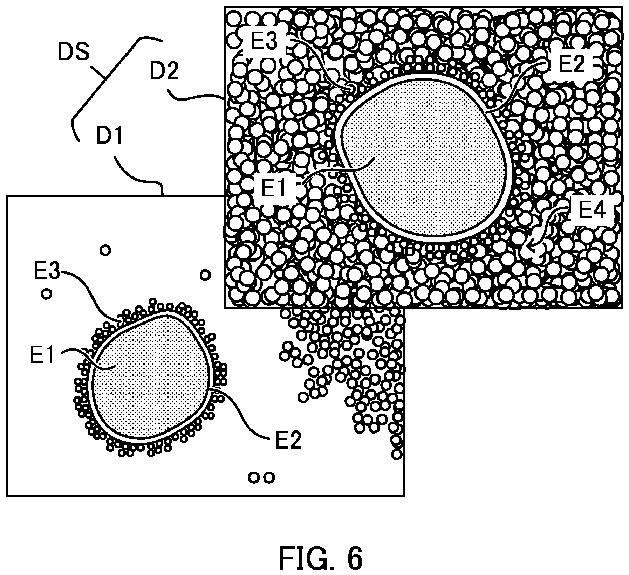

FIG. 4 is a flowchart showing one example of learning processing according to the present embodiment. FIG. 5 is a diagram showing one example of a learning dataset creation screen. FIG. 6 is a diagram illustrating an image included in the learning dataset. With reference to FIGS. 4 to 6, the learning processing for constructing the learned model stored in the storage unit 130 will be described below. Note that the learning processing shown in FIG. 4 may be performed by a computer other than the image processing device 100, and the image processing device 100 may acquire the completed learned model via a network or a recording medium.

When the processing shown in FIG. 4 is started, a window W1 shown in FIG. 5 is displayed. The window W1 shown in FIG. 5 is a learning dataset creation screen. The window W1 includes a region R1 to select an image file of the follicular fluid and a region R2 to display an image of the follicular fluid corresponding to the image file selected in the region R1.

When a worker who constructs the learned model selects one image file from a plurality of image files listed in the region R1, the computer displays a still image of the follicular fluid corresponding to the selected image file in the region R2 (step S1). Note that the worker is, for example, an experienced embryo cultivator or the like. Thereafter, the worker finds an egg from the still image displayed in the region R2, and as shown in FIG. 5, attaches a rectangular box B to the region containing the egg and performs an operation of saving the file. Upon detecting the worker's save operation, the computer creates the learning dataset (step S2). Specifically, the computer cuts out the region surrounded by the rectangular box B from the image displayed in the region R2 and adds the region to the learning dataset. By repeating steps S1 and S2 on a plurality of still images, a sufficient amount of learning dataset is prepared.

Note that the egg is surrounded by cumulus cells in the follicle, but the cumulus cells may peel off during egg collection when sucked from the follicle. Therefore, some of the eggs found during egg testing are surrounded by cumulus cells, and in some other eggs, the cumulus cells have peeled off and the corona radiata surrounding the egg is exposed. Therefore, the image included in the learning dataset preferably includes both an image of an egg surrounded by cumulus cells and an image of an egg that has peeled off from the cumulus cells.

Note that data D1 included in the dataset DS shown in FIG. 6 is one example of the image of the egg with cumulus cells peeled off. The data D1 shows that the zona pellucida E2 and the corona radiata E3 surround the egg E1. Meanwhile, data D2 is one example of the image of the egg surrounded by cumulus cells. The data D2 shows that the egg E1 (zona pellucida E2, corona radiata E3) is surrounded by the cumulus cells E4.

When a sufficient amount of learning dataset is prepared, the computer uses the learning dataset to cause the model that performs object detection of an egg to learn (step S3). That is, the computer trains, validates, and tests the model. Note that the dataset created in step S2 may be divided into training data-cum-verification data and test data. In that case, the training data-cum-validation data is preferably used for both training and validation by using cross-validation. Note that the training data is data used to train the model, and the validation data is data used to validate the model. The test data is data used to test the model.

The computer repeats the above processing until the model passes the test. When the test is passed, that is, when learning is finished, the computer finishes the processing shown in FIG. 4. By performing the processing shown in FIG. 4, it is possible to obtain the learned model that has been sufficiently trained and guarantees a certain level of performance. The obtained learned model is stored in the storage unit 130 of the image processing device 100.

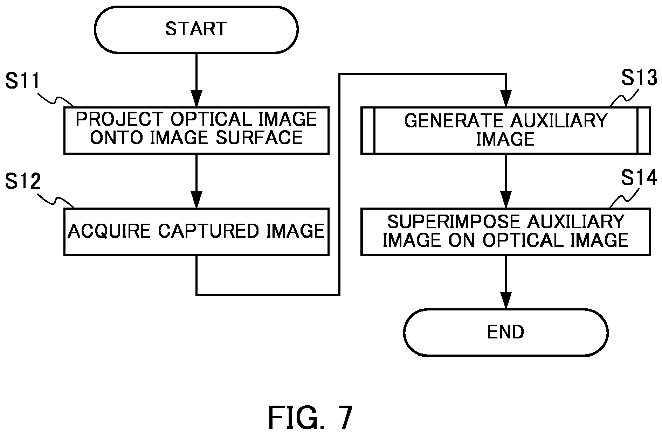

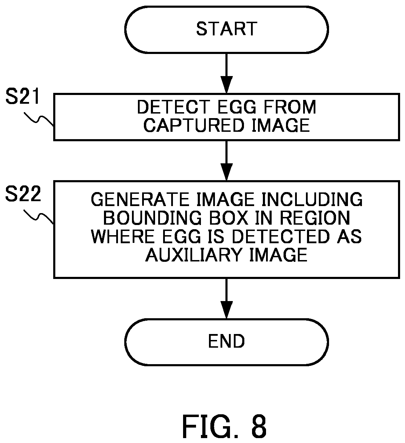

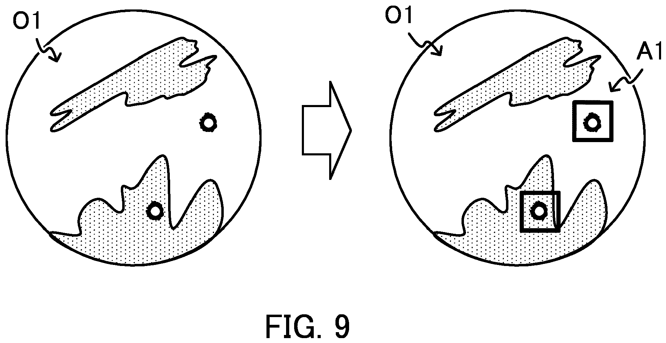

FIG. 7 is a flowchart showing one example of egg testing support processing according to the present embodiment. FIG. 8 is a flowchart showing one example of auxiliary image generation processing according to the present embodiment. FIG. 9 is one example of an image seen from the eyepiece 19. The egg testing support method performed by the microscopic system 1 will be described below with reference to FIGS. 7 to 9.

The egg testing support processing shown in FIG. 7 is started when the user of the microscopic system 1 places the container 40 accommodating the follicular fluid 50 on the stage 11 and starts egg testing.

When the egg testing support processing shown in FIG. 7 is started, to begin with, the microscopic system 1 projects the optical image onto the image surface (step S11). Here, the optical system including the objective 12 and the tube lens 18 forms, for example, an optical image O1 of the follicular fluid 50 as shown in FIG. 9 on the optical path of the microscope 10 based on light from the follicular fluid 50.

The microscopic system 1 acquires the captured image simultaneously with step S11 (step S12). Here, the image capturing device 15 acquires the captured image of the follicular fluid based on the light from the follicular fluid 50, and outputs the captured image to the image processing device 100.

Thereafter, the microscopic system 1 performs the auxiliary image generation processing shown in FIG. 8 (step S13). In the auxiliary image generation processing, to begin with, the image processing device 100 detects an egg from the captured image (step S21). Here, the image analysis unit 110 performs object detection of an egg by inputting the captured image into the learned model as an input image.

Thereafter, the image processing device 100 generates an image including the bounding box in the region where the egg is detected as the auxiliary image (step S22), and finishes the auxiliary image generation processing. Here, the image generation unit 120 generates an auxiliary image A1 based on an object detection result by the image analysis unit 110. More specifically, together with positional information on an object in the object detection, the image generation unit 120 may determine, as an egg, only an object with probability of classification output from the image analysis unit 110 equal to or greater than a threshold, or may generate the auxiliary image A1 including the bounding box in the region where there is an object with the probability of classification equal to or greater than the threshold. The auxiliary image A1 shown in FIG. 9 shows that the bounding box is formed in two regions where it is estimated by the object detection that an egg is present.

When the auxiliary image generation processing is finished, the microscopic system 1 superimposes the auxiliary image on the optical image (step S14), and finishes the processing shown in FIG. 7. Here, the projection device 17 projects the auxiliary image A1 generated in step S13 onto the image surface where the optical image O1 is formed, thereby superimposing the auxiliary image A1 on the optical image O1.

This allows the embryo cultivator who is the user of the microscopic system 1 to search for an egg by looking into the eyepiece 19, while looking at the image obtained by superimposing the auxiliary image A1 on the optical image O1, as shown in FIG. 9. Therefore, even an inexperienced embryo cultivator can surely find an egg that is often overlooked, such as an egg isolated from the cumulus cells. Therefore, the microscopic system 1 can support the search for an egg in the egg testing.

Note that FIG. 9 illustrates the auxiliary image A1 including the bounding box in the estimated region where it is estimated by the object detection that an egg is present, but the auxiliary image is required to include at least information for determining the estimated region. Therefore, instead of the rectangular bounding box, the estimated region may be surrounded by, for example, an arbitrary shape such as a circle. Instead of surrounding the estimated region, the region where an egg is present may be determined by other methods such as pointing at the estimated region with an arrow or the like.

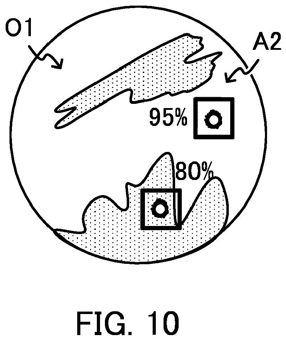

FIG. 10 is another example of the image seen from the eyepiece 19. FIG. 9 illustrates the auxiliary image A1 including only the information for determining the estimated region. However, information output from the image analysis unit 110 usually includes the probability of classification in addition to the positional information on the object. Therefore, the image generation unit 120 may generate the auxiliary image by using the probability of classification in addition to the positional information on the object. The auxiliary image may include, for example, information on the probability of being classified as an egg as shown in FIG. 10 in addition to the information for determining the estimated region (bounding box). An auxiliary image A2 shown in FIG. 10 shows that the egg in the first bounding box is classified as an egg with 95% probability, and that the egg in the second bounding box is classified as an egg with 80% probability. By displaying the probability of classification as shown in FIG. 10, when searching for an egg, the embryo cultivator can make the final determination as to whether the object is an egg, based on initial views of the embryo cultivator and the probability of classification. By checking those with a higher probability of classification with priority, it is expected that the egg testing time can be reduced.

### [Second Embodiment]

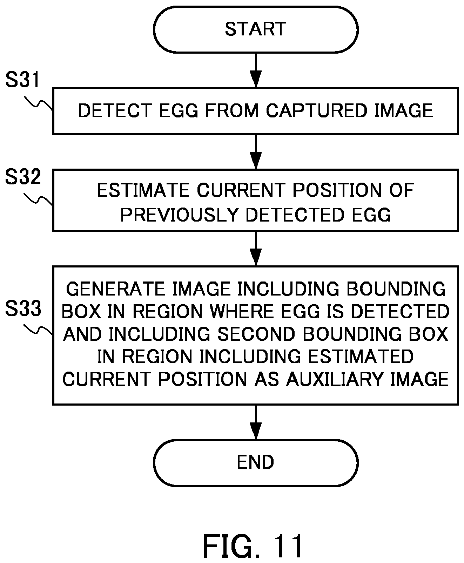

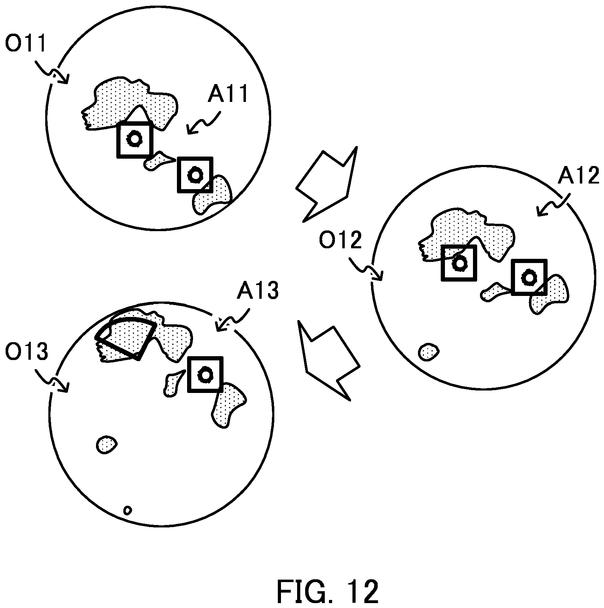

FIG. 11 is a flowchart showing one example of auxiliary image generation processing according to the present embodiment. FIG. 12 is still another example of an image seen from an eyepiece 19. The microscopic system according to the present embodiment (hereinafter simply referred to as a microscopic system) differs from the microscopic system 1 shown in FIG. 1 in that, in addition to object detection, an image analysis unit 110 performs object tracking to estimate the current position of an egg detected in another captured image acquired before a captured image. That is, in the present embodiment, the image analysis unit 110 performs image analysis including object detection and object tracking. An egg testing support processing according to the present embodiment is similar to the egg testing support processing shown in FIG. 7 except that auxiliary image generation processing shown in FIG. 11 is included instead of the auxiliary image generation processing shown in FIG. 8. With reference to FIGS. 11 and 12, an egg testing support method performed by the microscopic system according to the present embodiment will be described below with attention paid to the auxiliary image generation processing.

After finishing the processing of step S12 shown in FIG. 7, the microscopic system performs the auxiliary image generation processing shown in FIG. 11. In the auxiliary image generation processing, to begin with, an image processing device 100 detects an egg from the captured image (step S31). This processing is similar to step S21 of FIG. 8.

Next, the image processing device 100 estimates the current position of the previously detected egg (step 32). Here, the image analysis unit 110 performs object tracking of an egg. Specifically, the image analysis unit 110 estimates the current position of an egg based on a plurality of frames of captured image including the latest captured image. The image analysis unit 110 may determine, as an egg, only an object with the probability of classification output in object detection equal to or greater than a threshold, or may perform object tracking on only the object determined to be an egg. Note that the specific method of object tracking is not particularly limited, but a robust method is preferably adopted for occlusion where the tracking object is hidden behind other objects. For example, the current position of an egg may be estimated using a Kalman filter, a particle filter, or the like. The optical flow of the container may be calculated, and the current position of an egg may be estimated from the calculated optical flow.

Thereafter, the image processing device 100 generates, as an auxiliary image, an image including a bounding box in a region where an egg is detected and including a second bounding box in a region including the estimated current position (step S33), and finishes the auxiliary image generation processing. Here, an image generation unit 120 generates the auxiliary image based on an object detection result and an object tracking result by the image analysis unit 110. Specifically, for example, as shown in FIG. 12, while all the eggs in the field of view are detected by object detection, the image generation unit 120 generates the auxiliary image including only the rectangular bounding boxes (auxiliary image A11, auxiliary image A12). When some eggs are hidden behind other cells, the image generation unit 120 may generate the auxiliary image including the rectangular bounding box and a fan-shaped bounding box (auxiliary image A13). Note that the rectangular bounding box indicates the estimated region estimated by object detection, and the fan-shaped bounding box indicates the region including the egg's current position estimated by object tracking.

When the auxiliary image generation processing is finished, the microscopic system superimposes the auxiliary image on an optical image (step S14) and finishes the processing shown in FIG. 7. With this operation, even if some eggs are hidden behind other cells as a result of the user moving the container, for example, as shown in FIG. 12, it is possible to notify the user of the presence of the hidden egg without overlooking. Note that FIG. 12 shows, when the optical image formed on an image surface changes by moving the container, like optical image O11, optical image 012, and optical image 013, how the auxiliary image projected on the image surface changes like auxiliary image A11, auxiliary image A12, and auxiliary image A13.

In the present embodiment as well, since the auxiliary image is projected, an embryo cultivator can surely find an egg that is often overlooked. Therefore, the microscopic system according to the present embodiment can also support the search for an egg in egg testing in a similar manner to the microscopic system 1.

During egg testing, the embryo cultivator may perform work such as moving the container to move the field of view to another place, shaking the container to move the egg hidden behind other cells, and the like. While it may be possible to detect a new egg by object detection because such work moves the egg in the container, the previously detected egg may be hidden behind other cells and disappear. The microscopic system according to the present embodiment, which performs object tracking of an egg, can notify the user of the presence of a hidden egg.
Therefore, the microscopic system according to the present embodiment can further strongly support the search for an egg in egg testing.

### [Third Embodiment]

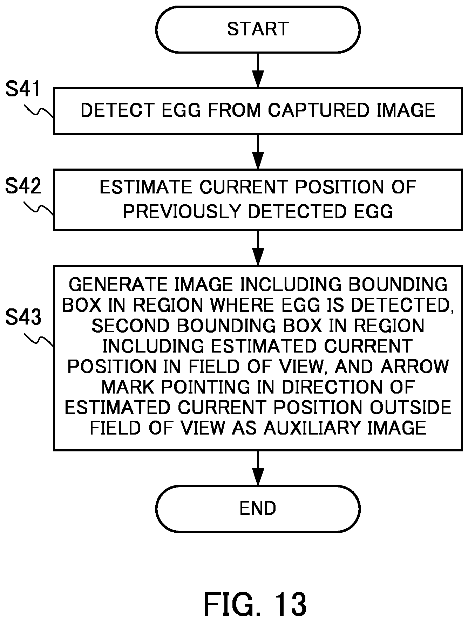

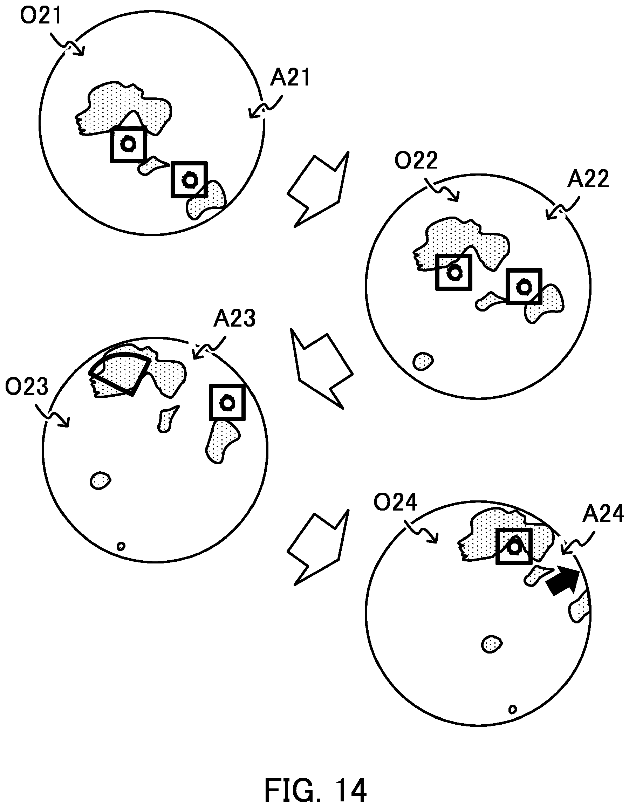

FIG. 13 is a flowchart showing one example of auxiliary image generation processing according to the present embodiment. FIG. 14 is still another example of an image seen from an eyepiece 19. A microscopic system according to the present embodiment (hereinafter, simply referred to as a microscopic system) is similar to the microscopic system according to the second embodiment in that an image analysis unit 110 performs object tracking in addition to object detection. The microscopic system differs from the microscopic system according to the second embodiment in that a user is notified of the presence of an egg that has moved outside the field of view, in addition to the presence of an egg in the field of view. More specifically, the microscopic system performs egg testing support processing including the auxiliary image generation processing shown in FIG. 13, instead of the auxiliary image generation processing shown in FIG. 11. With reference to FIGS. 13 and 14, an egg testing support method performed by the microscopic system according to the present embodiment will be described below with attention paid to the auxiliary image generation processing.

After finishing the processing of step S12 shown in FIG. 7, the microscopic system performs the auxiliary image generation processing shown in FIG. 13. In the auxiliary image generation processing, to begin with, an image processing device 100 detects an egg from a captured image (step S41) and estimates the current position of the previously detected egg (step 42). These processing steps are similar to the processing of steps S31 and S32 of FIG. 11.

Thereafter, the image processing device 100 generates, as an auxiliary image, an image including a bounding box in a region where an egg is detected, a second bounding box in a region including the estimated current position in the field of view, and information pointing in the direction of the estimated current position outside the field of view (step S43), and finishes the auxiliary image generation processing. Here, an image generation unit 120 generates the auxiliary image based on an object detection result and an object tracking result by the image analysis unit 110. Specifically, for example, as shown in FIG. 14, the image generation unit 120 generates the auxiliary image including only a rectangular bounding box (auxiliary image A21, auxiliary image A22) while all the eggs are detected by object detection, generates the auxiliary image including the rectangular bounding box and a fan-shaped bounding box (auxiliary image A23) when some eggs are hidden behind other cells, and generates the auxiliary image including the rectangular bounding box and an arrow mark when some eggs have moved outside the field of view (auxiliary image A24). Note that. The arrow mark is one example of information pointing in the direction of the current position outside the field of view estimated by object tracking, and is one example of information indicating the direction in which an egg outside the field of view is present.

When the auxiliary image generation processing is finished, the microscopic system superimposes the auxiliary image on an optical image (step S14) and finishes the processing shown in FIG. 7. With this operation, even if some eggs are hidden behind other cells or have moved outside the field of view as a result of the user moving a container, for example, as shown in FIG. 14, it is possible to notify the user of the presence of the hidden egg or the egg outside the field of view without overlooking. Note that FIG. 14 shows, when the optical image formed on an image surface changes by moving the container, like optical image 021, optical image 022, optical image 023, and optical image 024, how the auxiliary image projected on the image surface changes like auxiliary image A21, auxiliary image A22, auxiliary image A23, and auxiliary image A24.

In the present embodiment as well, since the auxiliary image is projected, an embryo cultivator can surely find an egg that is often overlooked. The microscopic system according to the present embodiment performs object tracking of an egg, thereby making it possible to notify the user of the presence of a hidden egg or the presence of an egg that has moved outside the field of view. Therefore, the microscopic system according to the present embodiment can further strongly support the search for an egg in egg testing.

### [Fourth Embodiment]

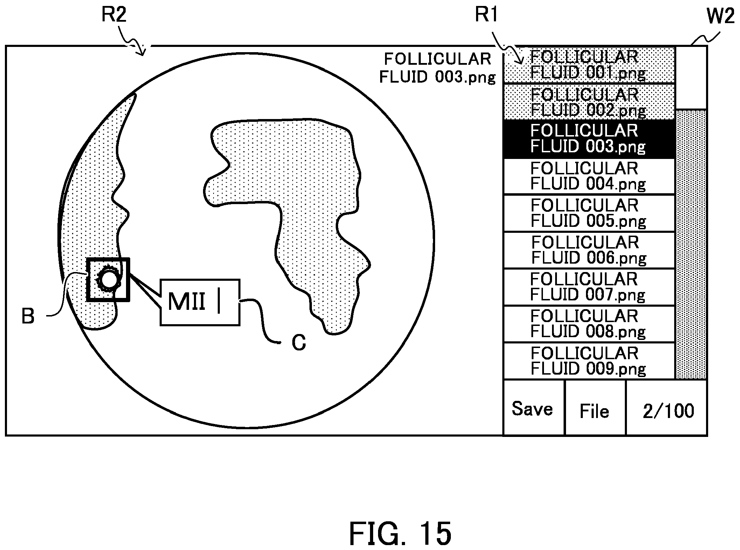

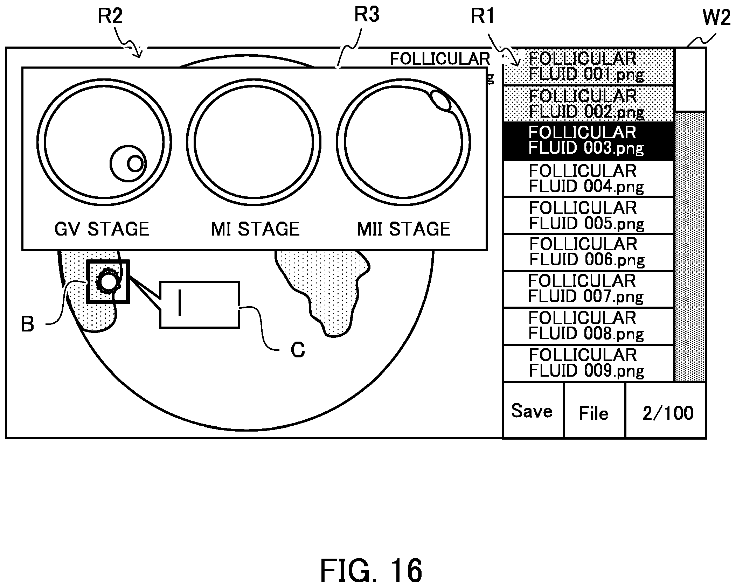

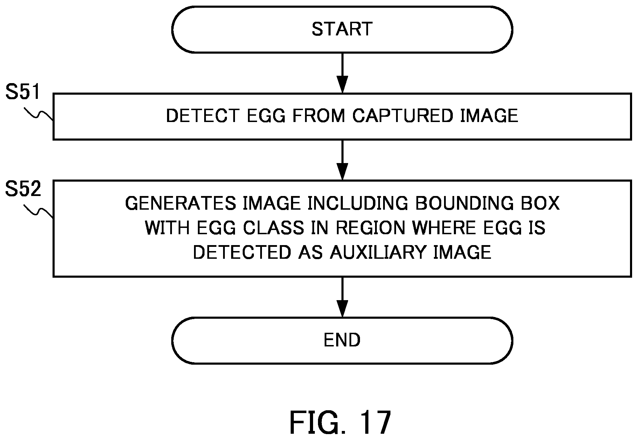

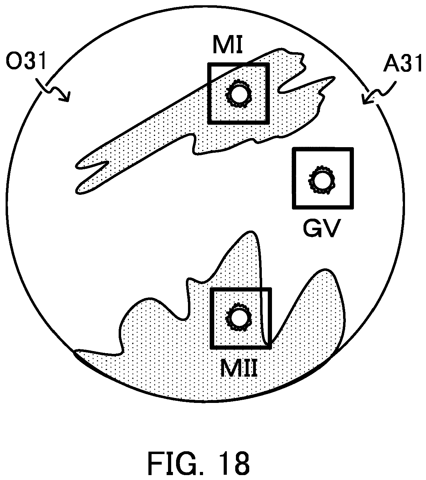

FIG. 15 is a diagram showing another example of a learning dataset creation screen. FIG. 16 is a diagram showing still another example of the learning dataset creation screen. FIG. 17 is a flowchart showing one example of auxiliary image generation processing according to the present embodiment. FIG. 18 is still another example of an image seen from an eyepiece 19. The microscopic system according to the present embodiment (hereinafter, simply referred to as a microscopic system) differs from the microscopic system 1 shown in FIG. 1 in that an image analysis unit 110 detects an egg by object detection by dividing the egg into a plurality of classes having different recommendation levels as a collection target in egg testing. Egg testing support processing according to the present embodiment is similar to the egg testing support processing shown in FIG. 7 except that the egg testing support processing includes auxiliary image generation processing shown in FIG. 17 instead of the auxiliary image generation processing shown in FIG. 8.

To begin with, with reference to FIGS. 15 and 16, learning processing for constructing a learned model stored in a storage unit 130 of the microscopic system according to the present embodiment will be described below. The procedure for the learning processing is basically similar to the procedure shown in FIG. 4. Therefore, the learning processing will be described with attention paid to the difference from the procedure shown in FIG. 4.

In the present embodiment, on a window W2 shown in FIG. 15, after finding an egg from a still image displayed in a region R2 and attaching a rectangular box B to a region containing the egg, a worker further determines the recommendation level as a collection target in egg testing and inputs recommendation level information in an input field C. When a save operation of the worker is detected, a computer cuts out the region surrounded by the rectangular box B from the image displayed in the region R2, and adds the cut image to a learning dataset as an image of the class according to the input recommendation level information. Note that the recommendation level information input by the worker may be egg maturity level information, and may include, for example, "GV" indicating a denatured egg that is a GV stage egg, "MI" indicating an immature egg that is an MI stage egg, and "MII" indicating a mature egg that is an MII stage egg. Furthermore, the worker may input the recommendation level information by distinguishing, for example, an overripe egg, a moderately mature egg, an abnormal egg, and the like.

By learning using the dataset obtained in this way, it is possible to construct the learned model that detects an egg by division into the plurality of classes having different recommendation levels as a collection target in egg testing. Therefore, a storage device 102 stores the learned model that has learned at least the position of the egg with respect to an input image and the plurality of classes of the egg. Note that, as shown in FIG. 16, when it is detected that the rectangular box B is attached to the region including an egg, a region R3 including sample images of eggs having different maturity may be displayed on the learning dataset creation screen (window W2). By displaying such sample images, determination of the recommendation level of an egg by the worker may be supported.

Next, with reference to FIGS. 17 and 18, an egg testing support method performed by the microscopic system according to the present embodiment will be described below with attention paid to the auxiliary image generation processing.

After finishing the processing of step S12 shown in FIG. 7, the microscopic system performs the auxiliary image generation processing shown in FIG. 17. In the auxiliary image generation processing, to begin with, an image processing device 100 detects an egg from the captured image (step S51). This processing is similar to the processing of step S21 of FIG. 8.

Thereafter, the image processing device 100 generates an image including a bounding box with an egg class in an estimated region as an auxiliary image (step S52), and finishes the auxiliary image generation processing. Here, an image generation unit 120 generates an auxiliary image based on an object detection result by the image analysis unit 110. Specifically, for example, as shown in FIG. 18, the image generation unit 120 generates an auxiliary image A31 having information for determining the egg class (GV, MI, MII) near the rectangular bounding box.

When the auxiliary image generation processing is finished, the microscopic system superimposes the auxiliary image on an optical image (step S14) and finishes the processing shown in FIG. 7. Here, a projection device 17 superimposes, for example, the auxiliary image A31 on an optical image 031 as shown in FIG. 18. This allows the microscopic system to notify the user of the estimated region and the recommendation level of the egg present in the region. This makes it possible to easily select an egg to be collected, for example when it is unnecessary to collect all the eggs.

Note that the present embodiment shows an example in which the recommendation level is notified to the user by displaying character information for determining the egg class. However, for example, the recommendation level may be notified to the user by creating a bounding box with color corresponding to the egg class. The recommendation level may be notified to the user by creating a bounding box having a shape corresponding to the egg class.

### [Fifth Embodiment]

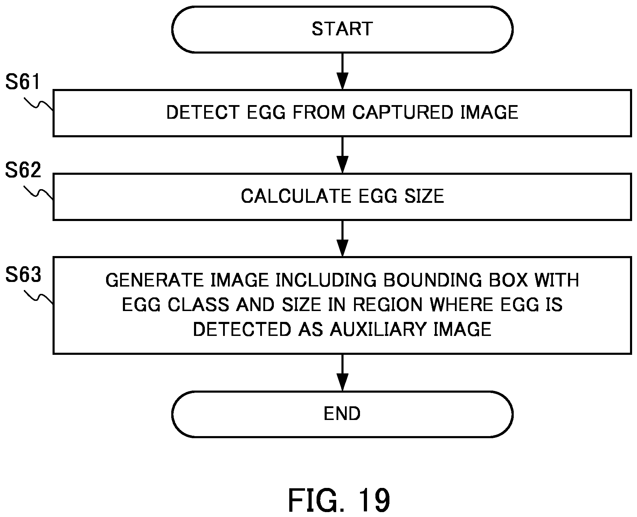

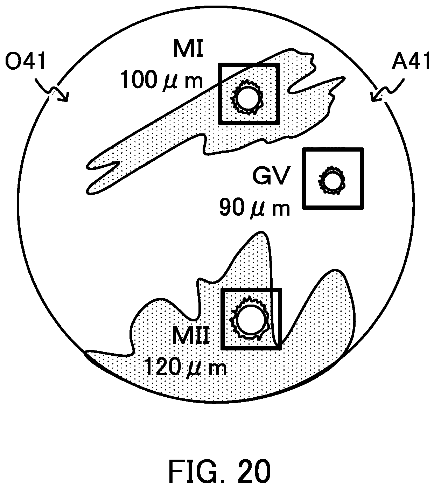

FIG. 19 is a flowchart showing one example of auxiliary image generation processing according to the present embodiment. FIG. 20 is still another example of an image seen from an eyepiece 19. A microscopic system according to the present embodiment (hereinafter, simply referred to as a microscopic system) differs from the microscopic system according to the fourth embodiment in that an image analysis unit 110 calculates the size of an egg detected by object detection. The microscopic system performs egg testing support processing including the auxiliary image generation processing shown in FIG. 19 instead of auxiliary image generation processing shown in FIG. 17. With reference to FIGS. 19 and 20, an egg testing support method performed by the microscopic system according to the present embodiment will be described below with attention paid to the auxiliary image generation processing.

After finishing the processing of step S12 shown in FIG. 7, the microscopic system performs the auxiliary image generation processing shown in FIG. 19. In the auxiliary image generation processing, to begin with, an image processing device 100 detects an egg from a captured image (step S61). This processing is similar to the processing of step S21 of FIG. 8.

Next, the image processing device 100 calculates the size of the egg (step S62). Here, the image analysis unit 110 may calculate the size of the egg, for example, from the area of a recommended region detected by object detection. The size of the egg may be calculated from the size of a bounding box surrounding the recommended region. Note that the size may be calculated in units of length such as diameter or in units of area.

Thereafter, the image processing device 100 generates an image including a bounding box with an egg class and size in the estimated region as an auxiliary image (step S63), and finishes the auxiliary image generation processing. Here, for example, as shown in FIG. 20, an image generation unit 120 generates an auxiliary image A41 including information for determining the egg class near the rectangular bounding box (GV, MI, MII) and information for determining the egg size (90 µm, 100 µm, 120 µm).

When the auxiliary image generation processing is finished, the microscopic system superimposes the auxiliary image on an optical image (step S14) and finishes the processing shown in FIG. 7. Here, a projection device 17 superimposes, for example, the auxiliary image A41 on the optical image 041 as shown in FIG. 20. This allows the microscopic system to notify the user of the estimated region and a recommendation level and size of the egg present in the region. This makes it possible to easily select an egg to be collected, for example when it is unnecessary to collect all the eggs.

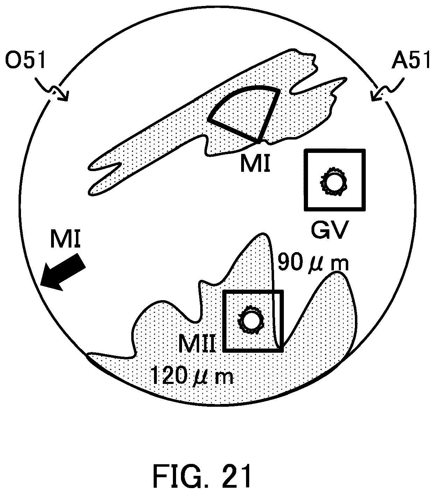

Note that the microscopic system according to the present embodiment may further perform object tracking. In that case, the display mode may be different between the egg detected by object detection and the egg whose current position is estimated by object tracking. For example, as shown in FIG. 21, for the egg detected by object detection, the recommendation level information (class) and the size may be displayed, and for the egg whose current position is estimated by object tracking, only the recommendation level information (class) may be displayed. Note that FIG. 21 shows how an auxiliary image A51 is superimposed on an optical image 051. In the auxiliary image A51, the class and size are attached to the egg detected by object detection, and only the class is attached to the egg whose presence is estimated by object tracking.

### [Sixth Embodiment]

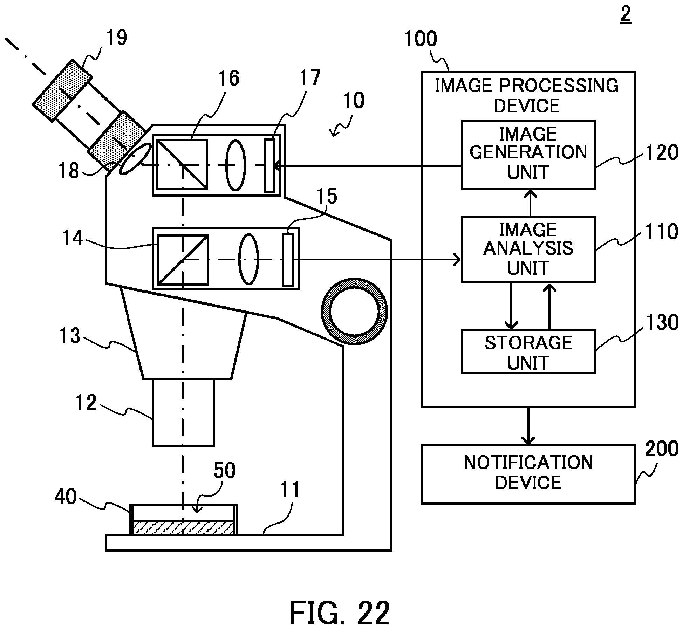

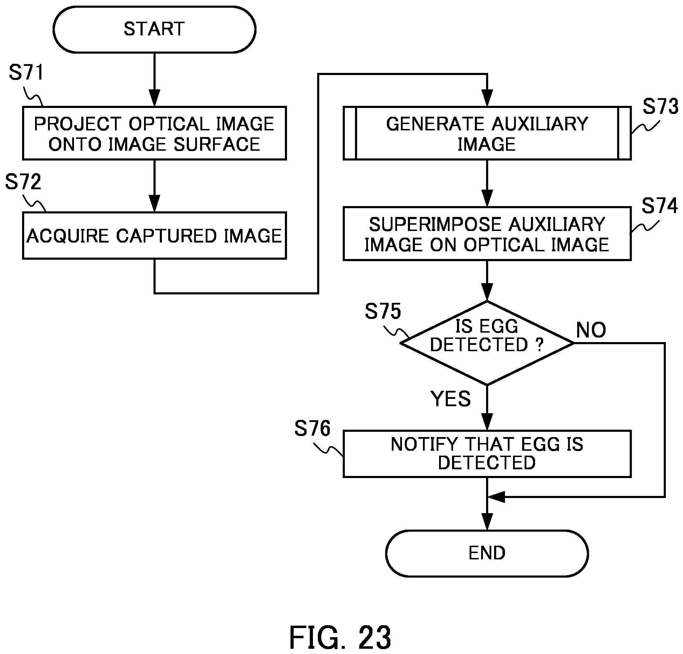

FIG. 22 is a diagram showing a configuration of a microscopic system 2. FIG. 23 is a flowchart showing one example of egg testing support processing according to the present embodiment. The microscopic system 2 differs from the microscopic system 1 in that a notification device 200 that notifies detection of an egg by object detection is provided. The notification device 200 is, for example, a voice output device such as a speaker that outputs voice, a light emitting device such as a lamp or a light that outputs a light beam, a vibration device such as a vibrator that outputs vibration, and the like. The microscopic system 2 performs the egg testing support processing shown in FIG. 23 instead of egg testing support processing shown in FIG. 7. The egg testing support method performed by the microscopic system 2 will be described below with reference to FIGS. 22 and 23.

The processing of steps S71 to S74 shown in FIG. 23 is similar to the processing of steps S11 to S14 shown in FIG. 7. When an auxiliary image is superimposed in step S74, an image processing device 100 determines whether an egg is detected by object detection in step S73 (step S75). When it is determined that an egg is detected (step S75 YES), the notification device 200 notifies the detection of an egg by object detection (step S76). The notification method is not particularly limited, and the notification device 200 may, for example, emit a warning sound or the like to call attention, or may emit light to call attention. The detection of an egg may be notified by voice. Note that an output device 104 of the image processing device 100 may also serve as the notification device 200.

The microscopic system 2 according to the present embodiment can also support the search for an egg in egg testing in a similar manner to the microscopic system 1 according to the first embodiment. In addition to visually notifying the user of the presence of an egg by projecting the auxiliary image, by notifying the egg detection with the notification device 200, it is possible to more reliably notify the user of the presence of an egg.

### [Seventh Embodiment]

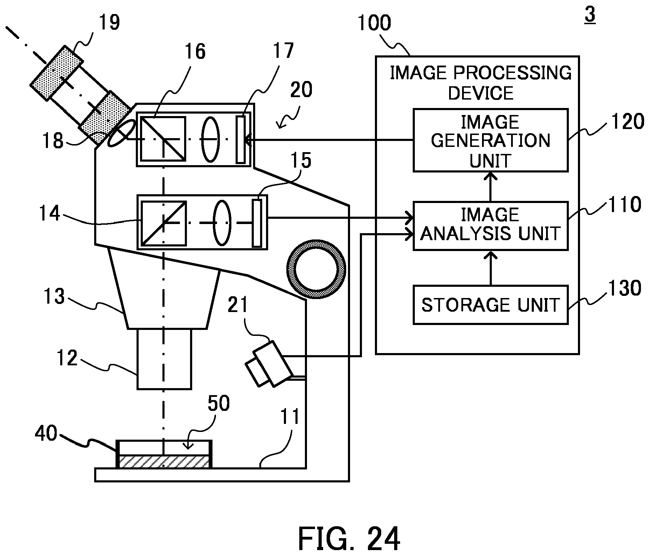

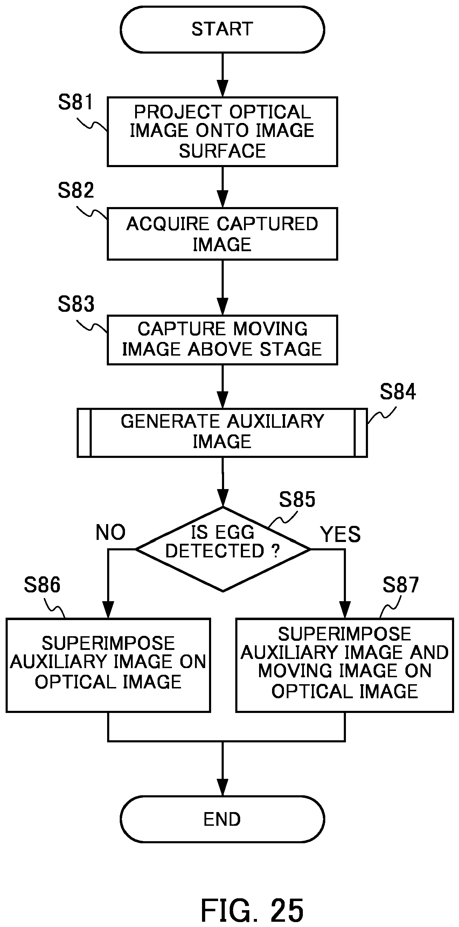

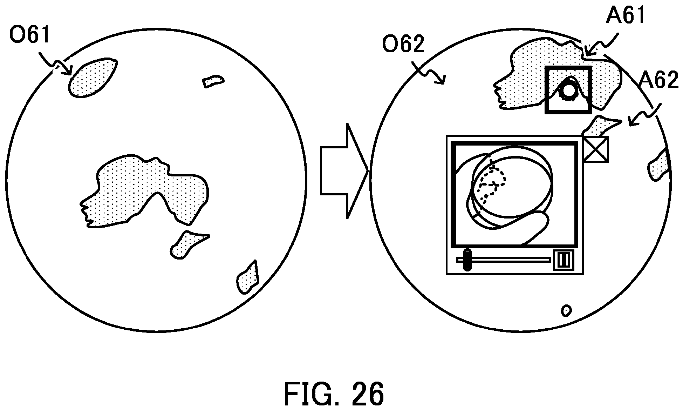

FIG. 24 is a diagram showing a configuration of a microscopic system 3. FIG. 25 is a flowchart showing one example of egg testing support processing according to the present embodiment. FIG. 26 is still another example of an image seen from an eyepiece 19. The microscopic system 3 differs from the microscopic system 1 in that a microscope 20 is provided instead of the microscope 10. The microscope 20 differs from the microscope 10 in that an image capturing device 21 is provided. Note that the image capturing device 21 is a device that acquires and records a moving image of a captured image of space above a stage 11 including a container 40 (second captured image), and is a second image capturing device. The image capturing device 21 is installed mainly for the purpose of capturing an image of work of an embryo cultivator on the stage 11. The microscopic system 3 performs the egg testing support processing shown in FIG. 25 instead of egg testing support processing shown in FIG. 7. An egg testing support method performed by the microscopic system 3 according to the present embodiment will be described below with reference to FIGS. 24 to 26.

The processing of steps S81, S82, and S84 shown in FIG. 25 is similar to the processing of steps S11 to S13 shown in FIG. 7. In step S83, the microscopic system 3 acquires a second captured image of the space above the stage 11 with the image capturing device 21. Note that here, a moving image is captured instead of a still image. When an auxiliary image is generated in step S84, an image processing device 100 determines whether an egg is detected by object detection in step S84 (step S85). When it is determined that no egg is detected (step S85 NO), a projection device 17 is controlled, and the projection device 17 superimposes the auxiliary image on an optical image (step S86). Note that the processing of step S86 is similar to the processing of step S14 shown in FIG. 7. Meanwhile, when it is determined that an egg is detected (step S85 YES), the image processing device 100 controls the projection device 17, and the projection device 17 superimposes the auxiliary image and the moving image of the second captured image on the optical image (step S87). That is, under the control of the image processing device 100, the image capturing device 21 records the moving image of the second captured image including a frame at the time when an egg is detected by object detection, and as shown in FIG. 26, the projection device 17 superimposes the recorded moving image A62 on the optical image O62 together with the auxiliary image A61. Note that FIG. 26 shows, when the optical image formed on the image surface changes from the optical image 061 where an egg is not detected to the optical image O62 where an egg is detected, how the moving image A62 recording the work of an embryo cultivator immediately before egg detection is displayed along with the auxiliary image A61.

The microscopic system 3 according to the present embodiment can also support the search for an egg in egg testing in a similar manner to the microscopic system 1 according to the first embodiment. The microscopic system 3 provides the embryo cultivator with details of the work performed by the embryo cultivator to detect an egg, for example, information such as how to tilt or move the container by using the moving image. Therefore, the microscopic system 3 can provide the embryo cultivator with an opportunity to learn desirable work procedures and the like for finding an egg.

### [Eighth Embodiment]

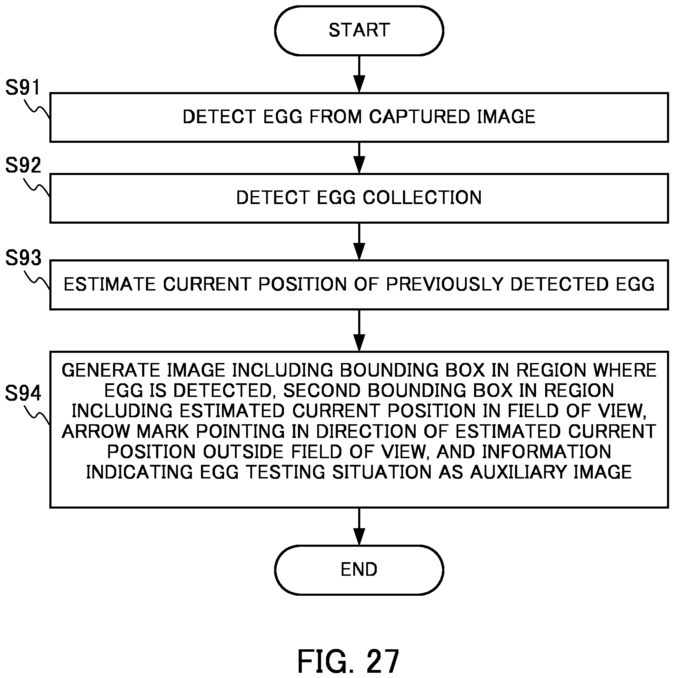

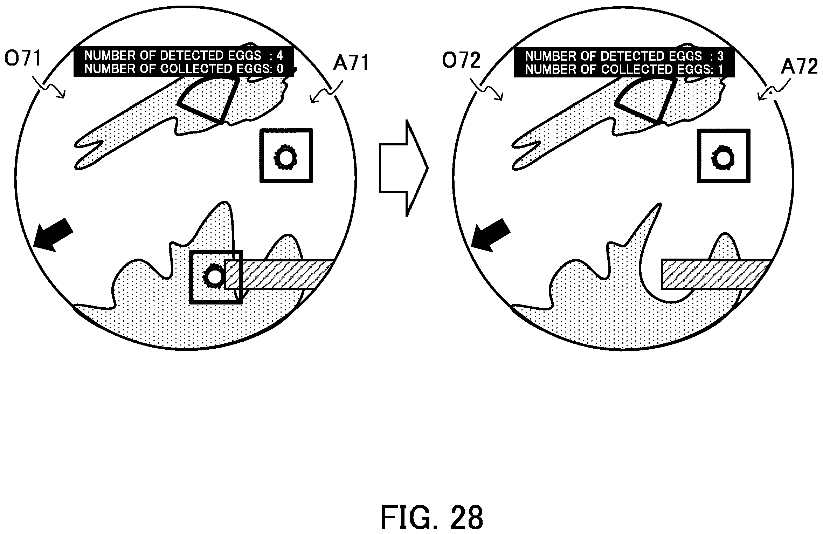

FIG. 27 is a flowchart showing one example of auxiliary image generation processing according to the present embodiment. FIG. 28 is still another example of an image seen from an eyepiece 19. A microscopic system according to the present embodiment (hereinafter, simply referred to as microscopic system) differs from the microscopic system according to the third embodiment in that in addition to object detection and object tracking, an image analysis unit 110 performs processing for recognizing that an egg is collected from a follicular fluid 50. The microscopic system performs egg testing support processing including the auxiliary image generation processing shown in FIG. 27 instead of auxiliary image generation processing shown in FIG. 13. With reference to FIGS. 27 and 28, an egg testing support method performed by the microscopic system according to the present embodiment will be described below with attention paid to the auxiliary image generation processing.

The processing of step S91 shown in FIG. 27 is similar to the processing of step S41 shown in FIG. 13. Next, an image processing device 100 detects egg collection (step S92). Specifically, the image analysis unit 110 performs processing for recognizing that an egg is collected from the follicular fluid 50 based on a moving image of a captured image captured by an image capturing device 15. Furthermore, the image processing device 100 estimates the current position of the previously detected egg (step S93). The processing of step S93 is similar to the processing of step S42 shown in FIG. 13 except that the egg collected in step S92 is excluded from tracking.

Thereafter, the image processing device 100 generates, as an auxiliary image, an image including a bounding box in the region where an egg is detected, a second bounding box in the region including the estimated current position in the field of view, an arrow mark pointing in the direction of the estimated current position outside the field of view, and information indicating the egg testing situation (step S94), and finishes the auxiliary image generation processing. The information indicating the egg testing situation and included in the auxiliary image preferably includes, for example, as shown in FIG. 28, the number of detected eggs and the number of collected eggs.

When the auxiliary image generation processing is finished, the microscopic system superimposes the auxiliary image on an optical image (step S14) and finishes the processing shown in FIG. 7. Note that FIG. 28 shows the state before and after collecting an egg with a pipette. While an auxiliary image A71 indicating the number of detected eggs 4 and the number of collected eggs 0 is superimposed on an optical image 071 before egg collection, an auxiliary image A72 indicating the number of detected eggs 3 and the number of collected eggs 1 is superimposed on an optical image 072 after egg collection. In this way, with the microscopic system, the number of collected eggs is automatically counted and the egg testing situation is provided into the user's field of view by using the auxiliary image. Therefore, the user can perform the egg testing work while always checking the number of eggs to be collected (that is, the number of eggs detected) and the number of eggs collected so far.

### [Ninth Embodiment]

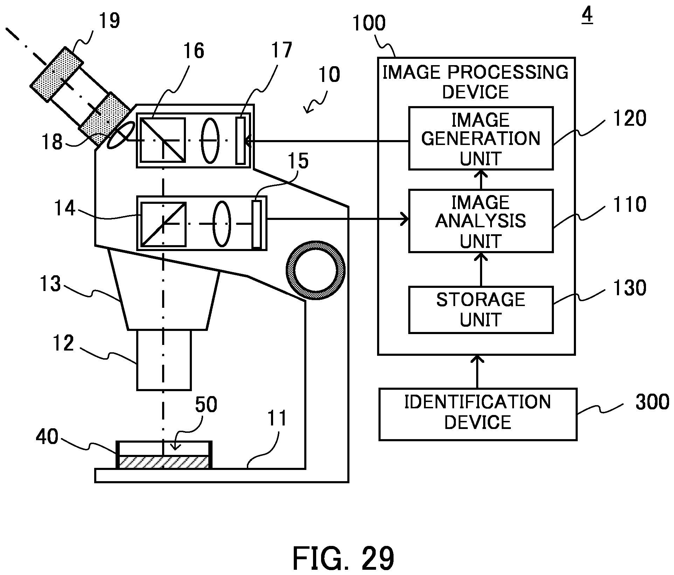

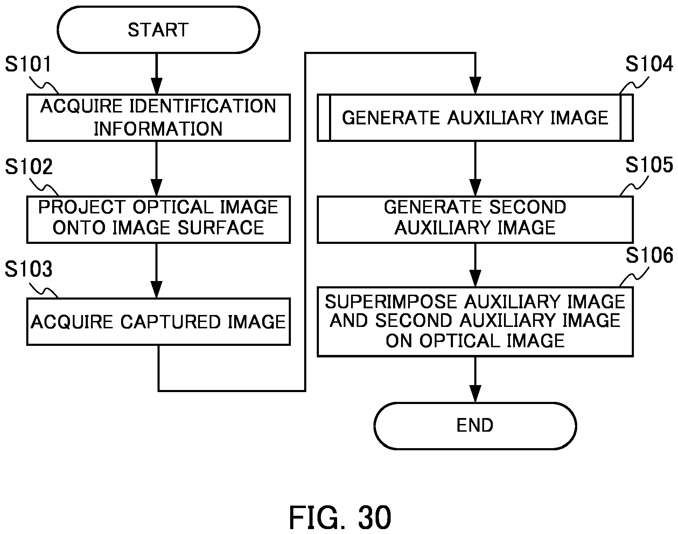

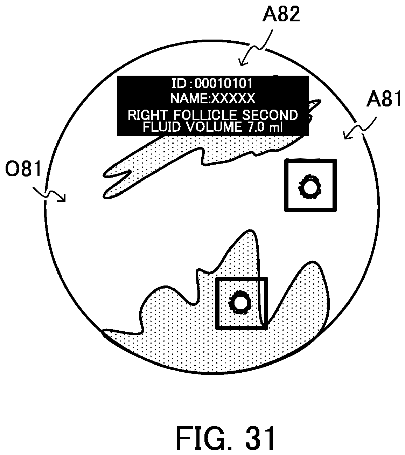

FIG. 29 is a diagram showing a configuration of a microscopic system 4. FIG. 30 is a flowchart showing one example of egg testing support processing according to the present embodiment. FIG. 31 is still another example of an image seen from an eyepiece 19. The microscopic system 4 differs from the microscopic system 1 in that an identification device 300 is provided. The identification device 300 is, for example, a QR code (registered trademark) reader or the like, and is a device for acquiring identification information added to a container 40. The microscopic system 4 performs the egg testing support processing shown in FIG. 30 instead of the egg testing support processing shown in FIG. 7. An egg testing support method performed by the microscopic system 4 according to the present embodiment will be described below with reference to FIGS. 29 to 31.

To begin with, the microscopic system 4 acquires the identification information (step S101). Here, for example, an embryo cultivator brings an identification label (QR code) attached to the container 40 closer to the identification device 300 before placing the container 40 on a stage 11. Accordingly, the identification device 300 reads the identification label and acquires the identification information. Note that the identification information includes information on a donor of a follicular fluid 50 in the container 40, or link information indicating the place where the donor's information is stored. The acquired identification information is output from the identification device 300 to an image processing device 100.

Next, the microscopic system 4 performs processing from step S102 to step S104. Note that the processing from step S102 to step S104 is similar to the processing from step S11 to step S13 shown in FIG. 7.

Furthermore, the microscopic system 4 generates a second auxiliary image (step S105). Here, an image generation unit 120 generates, for example, a second auxiliary image A82 including information on the donor of the follicular fluid 50 as shown in FIG. 31 based on the identification information acquired in step S101. Note that the second auxiliary image A82 differs from the auxiliary image generated based on the captured image in that the second auxiliary image A82 is generated based on the identification information. The second auxiliary image A82 includes information such as an ID and name of the donor of the follicular fluid 50, position of the follicle (ovary) from which the follicular fluid 50 is collected, order in which the follicular fluid 50 is collected, and the amount collected.

Finally, the microscopic system 4 superimposes the auxiliary image and the second auxiliary image on the optical image (step S106), and finishes the processing shown in FIG. 30. Note that FIG. 31 shows how the auxiliary image A81 and the second auxiliary image A82 are superimposed on the optical image 081. In this way, the microscopic system 4 can check patient information during egg testing, and therefore can prevent a sample from being mixed up.

### [Tenth Embodiment]

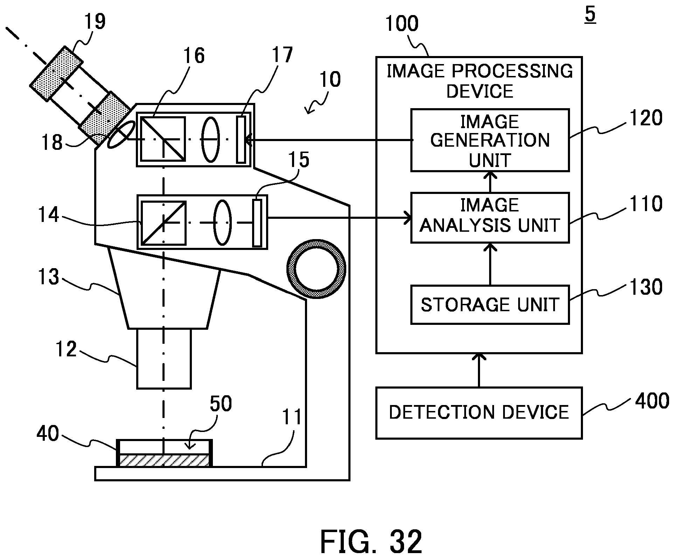

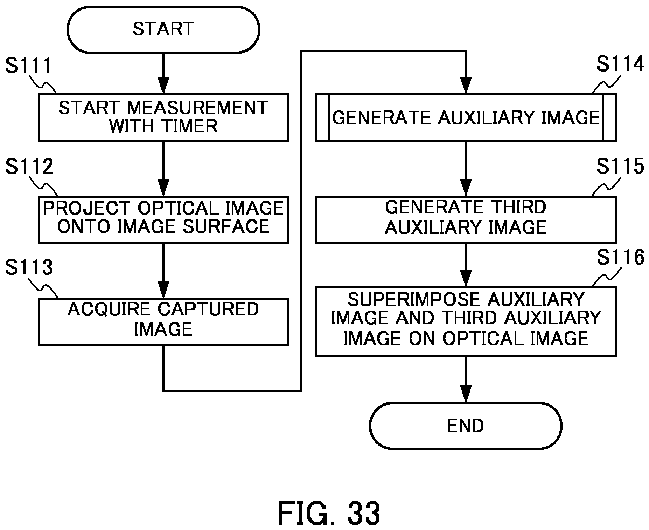

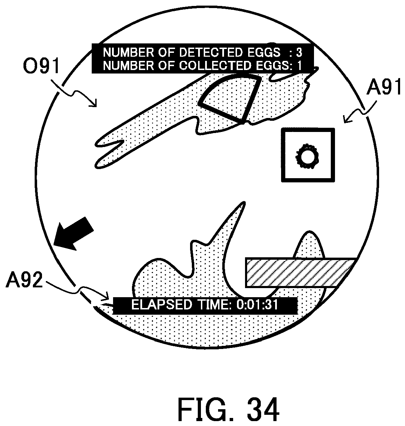

FIG. 32 is a diagram showing a configuration of a microscopic system 5. FIG. 33 is a flowchart showing one example of egg testing support processing according to the present embodiment. FIG. 34 is still another example of an image seen from an eyepiece 19. The microscopic system 5 differs from the microscopic system 1 in that a detection device 400 is provided. The detection device 400 is, for example, a sensor that detects that a container 40 is placed on a stage 11, and is a device that detects that egg testing starts. The microscopic system 5 performs the egg testing support processing shown in FIG. 33 instead of the egg testing support processing shown in FIG. 7. An egg testing support method performed by the microscopic system 5 according to the present embodiment will be described below with reference to FIGS. 32 to 34.

To begin with, when the detection device 400 detects that the container 40 is placed on the stage 11, the microscopic system 5 starts measurement with a timer (step S111). Note that the timer may be included, for example, in a processor 101 and measures elapsed time from detecting a predetermined event. In this example, the timer measures the elapsed time from detecting a detection signal from the detection device 400.

Next, the microscopic system 5 performs processing from step S112 to step S114. Note that the processing of steps S112 and S113 is similar to the processing of steps S11 and S12 shown in FIG. 7. The processing of step S114 is similar to the auxiliary image generation processing shown in FIG. 27.

Furthermore, the microscopic system 5 generates a third auxiliary image (step S115). Here, an image generation unit 120 generates, for example, a third auxiliary image A92 including the elapsed time measured by the timer as shown in FIG. 34. Note that the third auxiliary image A92 differs from the auxiliary image generated based on the captured image in that the third auxiliary image A92 is generated based on a measurement result by the timer.

Finally, the microscopic system 5 (projection device 17) superimposes the auxiliary image and the third auxiliary image on an optical image (step S116), and finishes the processing shown in FIG. 33. Note that FIG. 34 shows how an auxiliary image A91 and the third auxiliary image A92 are superimposed on an optical image 091. In this way, the microscopic system allows the user to perform egg testing work while always checking the elapsed time from when the egg testing starts.

Note that the present embodiment indicates an example in which the start of egg testing is automatically detected by the detection device 400, but the start of egg testing may be detected, for example, based on an operation signal from an input device 103. That is, the input device 103 may function as the detection device 400.

### [Eleventh Embodiment]

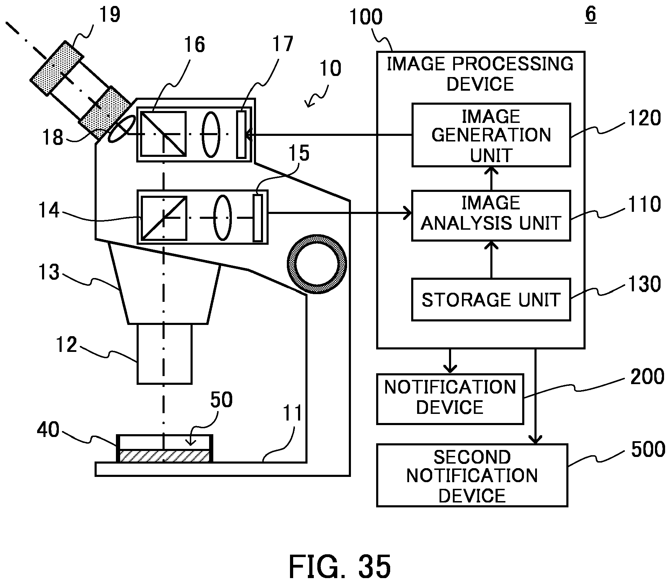

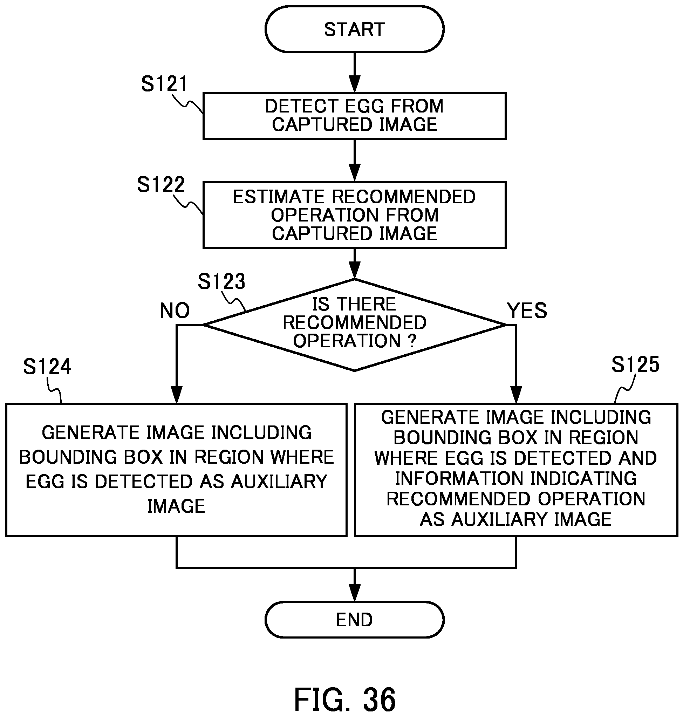

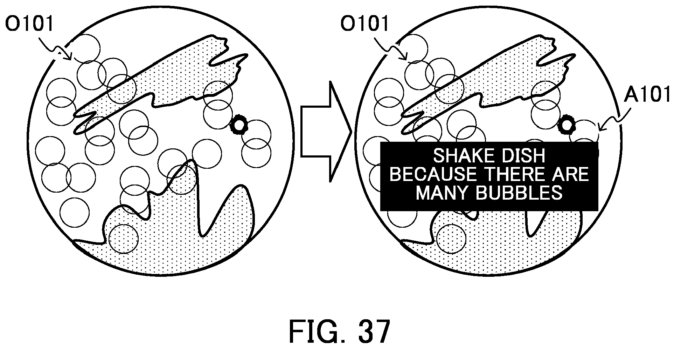

FIG. 35 is a diagram showing a configuration of a microscopic system 6. FIG. 36 is a flowchart showing one example of auxiliary image generation processing according to the present embodiment. Each of FIGS. 37 to 39 is still another example of an image seen from an eyepiece 19. The microscopic system 6 differs from the microscopic system 2 in that a second notification device 500 for notifying a recommended operation is provided in addition to a notification device 200 for notifying detection of an egg (first notification device), and that an image analysis unit 110 performs processing for estimating the recommended operation in addition to object detection. The second notification device 500 is, for example, a voice output device such as a speaker that outputs voice. The microscopic system 6 differs from the microscopic system 2 in that the auxiliary image generation processing shown in FIG. 36 is performed in egg testing support processing shown in FIG. 23. An egg testing support method performed by the microscopic system 6 will be described below with reference to FIGS. 35 to 39.

After finishing the processing of step S72 shown in FIG. 23, the microscopic system 6 performs the auxiliary image generation processing shown in FIG. 36. In the auxiliary image generation processing, to begin with, an image processing device 100 detects an egg from a captured image (step S121). This processing is similar to the processing of step S21 of FIG. 8.

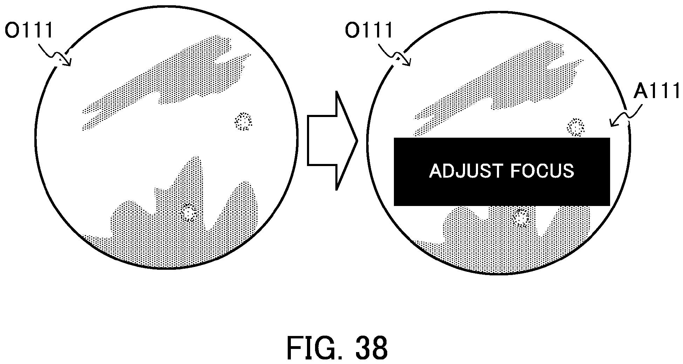

Next, the image processing device 100 estimates the recommended operation from the captured image (step S122). Here, the image analysis unit 110 estimates the recommended operation to be performed during egg testing based on the captured image. This processing may be implemented, for example, by a learned model. For example, in a situation where an optical image O101 as shown in FIG. 37 is obtained, it is difficult to find an egg because of many bubbles. Therefore, the image analysis unit 110 may estimate an operation of shaking a container 40 as a recommended operation. For example, in a situation where an optical image O111 as shown in FIG. 38 is obtained, it is difficult to find an egg because the contrast of the image is low. Therefore, the image analysis unit 110 may estimate an operation of operating a focusing unit to adjust the focus as a recommended operation. For example, in a situation where a predetermined time or more has elapsed since the start of egg testing, the elapsed time exceeds allowable egg testing time and the image analysis unit 110 may estimate stopping the egg testing with the current follicular fluid 50 as a recommended operation.

Thereafter, the image processing device 100 determines whether the recommended operation is estimated in step S122 (step S123). When the recommended operation is not estimated, that is, when there is no recommended operation (step S123 NO), the image processing device 100 generates an image including a bounding box in a region where an egg is detected as an auxiliary image (step S124), and finishes the auxiliary image generation processing. Note that the processing of step S124 is similar to the processing of step S22 of FIG. 8.

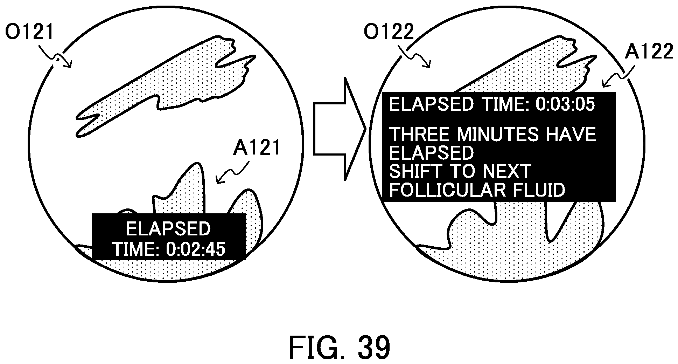

When the recommended operation is estimated, that is, when there is a recommended operation (step S123 YES), the image processing device 100 generates an image including a bounding box in a region where an egg is detected and information indicating the recommended operation as an auxiliary image (step S125), and finishes the auxiliary image generation processing. Here, in a case where the operation of shaking the container 40 is estimated as a recommended operation, an image generation unit 120 generates, for example, an auxiliary image A101 shown in FIG. 37. In a case where the operation of adjusting the focus is estimated as a recommended operation, the image generation unit 120 generates, for example, an auxiliary image A111 shown in FIG. 38. In a case where the operation of stopping the egg testing is estimated as a recommended operation, the image generation unit 120 generates, for example, an auxiliary image A122 shown in FIG. 39.

Thereafter, the microscopic system 6 (projection device 17) superimposes the auxiliary image on the optical image. Accordingly, as shown in FIGS. 37 to 39, the recommended operation is notified to the user. Furthermore, the microscopic system 6 notifies the detection of an egg by using the notification device 200 when the egg is detected, and notifies the recommended operation by using the second notification device 500 when the recommended operation is estimated. This allows the user to more reliably recognize the recommended operation.

The above-described embodiments are specific examples for facilitating understanding of the invention, and embodiments of the present invention are not limited to these embodiments. The microscopic system, projection unit, and egg testing support method can be modified and changed in various ways without departing from the scope of the invention described in the claims.

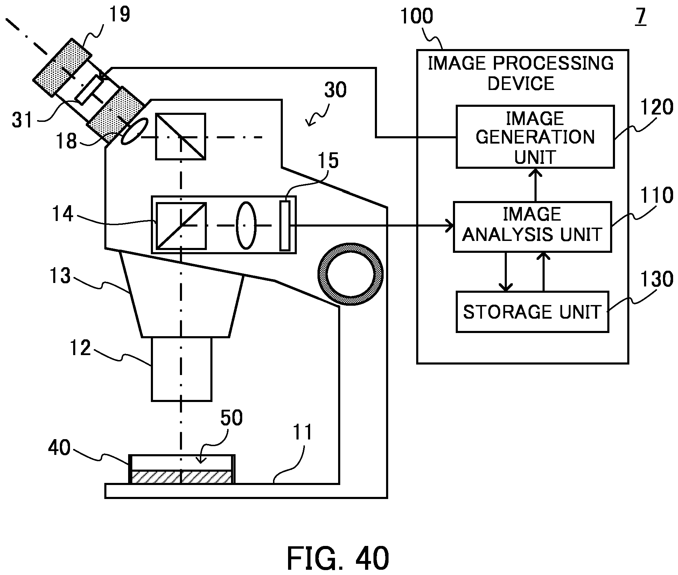

FIG. 40 is a diagram showing a configuration of a microscopic system 7. The above-described embodiments illustrate the projection device 17 disposed on the optical path branched off the optical path between the objective 12 and the eyepiece 19. However, as shown in FIG. 40, the device for superimposing the auxiliary image may be disposed on the optical path between the objective 12 and the eyepiece 19. The microscopic system 7 includes a microscope 30 including a display device 31 on an image surface on which an optical image is formed, and an image processing device 100. The display device 31 is a transmissive image display device, and is one example of a superimposition device that superimposes an auxiliary image on the optical image by displaying the auxiliary image directly on the image surface. The microscopic system 7 can also support the search for an egg by the user in egg testing in a similar manner to the microscopic system 1.

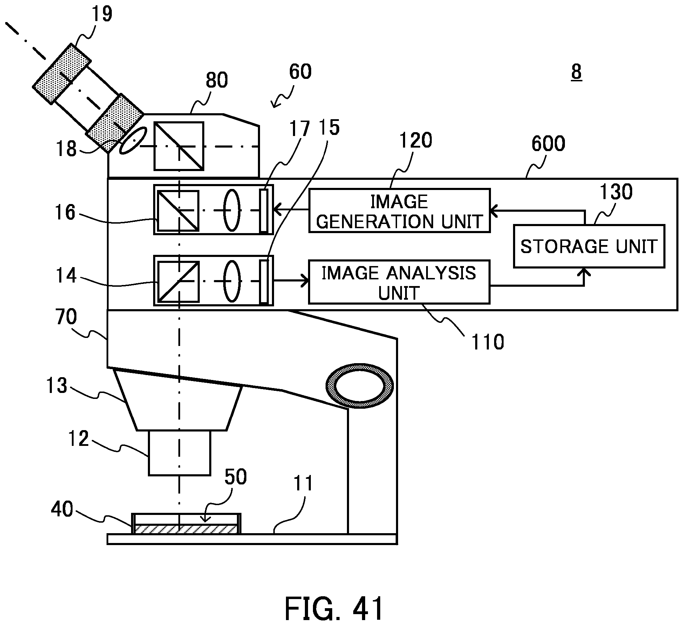

FIG. 41 is a diagram showing a configuration of a microscopic system 8. The above-described embodiments show an example in which the image capturing device 15 and the projection device 17 are provided in the microscope 10 and the image processing device 100 independent of the microscope 10 exchanges data with the image capturing device 15 and the projection device 17 to superimpose the auxiliary image on the optical image. However, the image capturing device, the projection device, and the image processing device may be integrally configured as shown in FIG. 41.

As shown in FIG. 41, a projection unit 600 installed between a microscopic body 70 and a lens-barrel 80 of a microscope 60 may include the image capturing device 15, the projection device 17, and the image processing device (image analysis unit 110, image generation unit 120, storage unit 130). Using such a projection unit 600 makes it possible to easily add a function of superimposing the auxiliary image to the existing microscope.

### Reference Signs List

- 1 to 8: microscopic system
- 10, 20, 30, 60: microscope
- 11: stage
- 12: objective
- 15, 15a, 15b, 21: image capturing device
- 17, 17a, 17b: projection device
- 18, 18a, 18b: tube lens
- 19: eyepiece
- 31: display device
- 40: container
- 50: follicular fluid
- 70: microscopic body
- 80: lens-barrel
- 100: image processing device
- 101: processor
- 102: storage device
- 110: image analysis unit
- 120: image generation unit
- 130: storage unit
- 200: notification device
- 300: identification device
- 400: detection device
- 500: second notification device
- 600: projection unit

## Claims

1. A microscopic system comprising:
a microscope;
an image capturing device configured to acquire a captured image of a follicular fluid accommodated in a container placed on a stage of the microscope;
an image processing device configured to generate an auxiliary image including information to determine a region where presence of an egg is estimated based on the captured image acquired by the image capturing device; and
a superimposition device configured to superimpose the auxiliary image generated by the image processing device on an optical image of the follicular fluid formed on an image surface on an optical path of the microscope.

2. The microscopic system according to claim 1,
wherein the image processing device includes:
an image analysis unit configured to perform image analysis including object detection of the egg on the captured image; and
an image generation unit configured to generate the auxiliary image based on a result of the image analysis.

3. The microscopic system according to claim 1,
wherein the image processing device includes:
an image analysis unit configured to perform image analysis including object detection of the egg on the captured image and object tracking to estimate a current position of the egg detected in another captured image acquired before the captured image; and
an image generation unit configured to generate the auxiliary image based on a result of the image analysis.

4. The microscopic system according to claim 3, wherein
when the current position of the egg estimated by the object tracking is outside a field of view of the microscope, the auxiliary image further includes information indicating presence of the egg outside the field of view.

5. The microscopic system according to claim 4, wherein
the information indicating the presence of the egg outside the field of view includes information indicating a direction in which the egg outside the field of view is present.

6. The microscopic system according to any one of claims 2 to 5, wherein
the image analysis unit detects the egg by the object detection by dividing the egg into a plurality of classes with a different recommendation level as a collection target in egg testing, and
the auxiliary image further includes information to determine each of the classes of the egg of which the presence is estimated.

7. The microscopic system according to claim 6, wherein
the plurality of classes includes a class indicating a mature egg, a class indicating an immature egg, and a class indicating a denatured egg.

8. The microscopic system according to any one of claims 2 to 7, further comprising
a first notification device configured to notify the detection of the egg by the object detection.

9. The microscopic system according to any one of claims 2 to 8, wherein
the image analysis further includes processing for estimating a recommended operation to be performed during the egg testing based on the captured image, and
the microscopic system further includes a second notification device configured to notify the estimated recommended operation.

10. The microscopic system according to any one of claims 2 to 9, wherein
the image analysis further includes processing for recognizing that the egg is collected from the follicular fluid based on a moving image of the captured image captured by the image capturing device.

11. The microscopic system according to claim 10, wherein
the auxiliary image further includes information indicating an egg testing situation including a number of detected eggs and a number of collected eggs.

12. The microscopic system according to any one of claims 2 to 11, further comprising
a second image capturing device configured to record a moving image of a second captured image of space above the stage including the container, the moving image of the second captured image including a frame at a time when the egg is detected by the object detection.

13. The microscopic system according to claim 12, wherein
the superimposition device superimposes the auxiliary image and the moving image of the second captured image on the optical image.

14. The microscopic system according to any one of claims 2 to 13, further comprising
an identification device configured to acquire identification information attached to the container, wherein
the image generation unit generates a second auxiliary image including information on a donor of the follicular fluid based on the identification information, and
the superimposition device superimposes the auxiliary image and the second auxiliary image on the optical image.

15. The microscopic system according to any one of claims 2 to 14, further comprising
a timer configured to measure elapsed time since a predetermined event is detected, wherein
the image generation unit generates a third auxiliary image including the elapsed time measured by the timer, and
the superimposition device superimposes the auxiliary image and the third auxiliary image on the optical image.

16. The microscopic system according to any one of claims 2 to 15, wherein
the image processing device further includes a storage unit configured to store a learned model that has learned at least a position of the egg with respect to an input image, and
the image analysis unit performs the object detection using the learned model stored in the storage unit.

17. The microscopic system according to any one of claims 2 to 15, wherein
the image processing device further includes a storage unit configured to store a learned model that has learned at least a position of the egg with respect to an input image and the plurality of classes of the egg, and
the image analysis unit performs the object detection using the learned model stored in the storage unit.

18. The microscopic system according to any one of claims 1 to 17, wherein
the microscope is a stereoscopic microscope including an eyepiece.

19. A projection unit to be used by being attached to a microscope, the projection unit comprising:
an image processing device configured to generate an auxiliary image including information to determine a region where presence of an egg is estimated based on a captured image of a follicular fluid accommodated in a container placed on a stage of the microscope; and
a superimposition device configured to superimpose the auxiliary image generated by the image processing device on an optical image of the follicular fluid formed on an image surface on an optical path of the microscope.

20. An egg testing support method comprising:
acquiring a captured image of a follicular fluid accommodated in a container placed on a stage of a microscope;
generating an auxiliary image including information to determine a region where presence of an egg is estimated based on the acquired captured image; and
superimposing the generated auxiliary image on an optical image of the follicular fluid formed on an image surface on an optical path of the microscope.

## Amended claims

### Amended claims under Art. 19.1 PCT

1. (Amended) A microscopic system comprising:
a microscope;
an image capturing device configured to acquire a captured image of a follicular fluid accommodated in a container placed on a stage of the microscope, the follicular fluid including an egg and a cell other than the egg;
an image processing device configured to generate an auxiliary image including information to determine a region where presence of the egg is estimated based on the captured image acquired by the image capturing device; and
a superimposition device configured to superimpose the auxiliary image generated by the image processing device on an optical image of the follicular fluid formed on an image surface on an optical path of the microscope,
wherein the image processing device includes:
an image analysis unit configured to perform image analysis including object detection of the egg from inside the follicular fluid on the captured image; and
an image generation unit configured to generate the auxiliary image based on a result of the image analysis.

2. (Canceled)

3. (Amended) The microscopic system according to claim 1, wherein
the image analysis performed by the image analysis unit includes: the object detection of the egg on the captured image; and object tracking to estimate a current position of the egg detected in another captured image acquired before the captured image.

4. The microscopic system according to claim 3, wherein
when the current position of the egg estimated by the object tracking is outside a field of view of the microscope, the auxiliary image further includes information indicating presence of the egg outside the field of view.

5. The microscopic system according to claim 4, wherein
the information indicating the presence of the egg outside the field of view includes information indicating a direction in which the egg outside the field of view is present.

6. (Amended) The microscopic system according to claim 1 or any one of claims 3 to 5, wherein
the image analysis unit detects the egg by the object detection by dividing the egg into a plurality of classes with a different recommendation level as a collection target in egg testing, and
the auxiliary image further includes information to determine each of the classes of the egg of which the presence is estimated.

7. The microscopic system according to claim 6, wherein
the plurality of classes includes a class indicating a mature egg, a class indicating an immature egg, and a class indicating a denatured egg.

8. (Amended) The microscopic system according to claim 1 or any one of claims 3 to 7, further comprising
a first notification device configured to notify the detection of the egg by the object detection.

9. (Amended) The microscopic system according to claim 1 or any one of claims 3 to 8, wherein
the image analysis further includes processing for estimating a recommended operation to be performed during the egg testing based on the captured image, and
the microscopic system further includes a second notification device configured to notify the estimated recommended operation.

10. (Amended) The microscopic system according to claim 1 or any one of claims 3 to 9, wherein
the image analysis further includes processing for recognizing that the egg is collected from the follicular fluid based on a moving image of the captured image captured by the image capturing device.

11. The microscopic system according to claim 10, wherein
the auxiliary image further includes information indicating an egg testing situation including a number of detected eggs and a number of collected eggs.

12. (Amended) The microscopic system according to claim 1 or any one of claims 3 to 11, further comprising
a second image capturing device configured to record a moving image of a second captured image of space above the stage including the container, the moving image of the second captured image including a frame at a time when the egg is detected by the object detection.

13. The microscopic system according to claim 12, wherein
the superimposition device superimposes the auxiliary image and the moving image of the second captured image on the optical image.

14. (Amended) The microscopic system according to claim 1 or any one of claims 3 to 13, further comprising
an identification device configured to acquire identification information attached to the container, wherein
the image generation unit generates a second auxiliary image including information on a donor of the follicular fluid based on the identification information, and
the superimposition device superimposes the auxiliary image and the second auxiliary image on the optical image.

15. (Amended) The microscopic system according to claim 1 or any one of claims 3 to 14, further comprising
a timer configured to measure elapsed time since a predetermined event is detected, wherein
the image generation unit generates a third auxiliary image including the elapsed time measured by the timer, and
the superimposition device superimposes the auxiliary image and the third auxiliary image on the optical image.

16. (Amended) The microscopic system according to claim 1 or any one of claims 3 to 15, wherein
the image processing device further includes a storage unit configured to store a learned model that has learned at least a position of the egg with respect to an input image, and
the image analysis unit performs the object detection using the learned model stored in the storage unit.

17. (Amended) The microscopic system according to claim 1 or any one of claims 3 to 15, wherein
the image processing device further includes a storage unit configured to store a learned model that has learned at least a position of the egg with respect to an input image and the plurality of classes of the egg, and
the image analysis unit performs the object detection using the learned model stored in the storage unit.

18. (Amended) The microscopic system according to claim 1 or any one of claims 3 to 17, wherein
the microscope is a stereoscopic microscope including an eyepiece.

19. (Amended) A projection unit to be used by being attached to a microscope, the projection unit comprising:
an image processing device configured to generate an auxiliary image including information to determine a region where presence of an egg is estimated based on a captured image of a follicular fluid accommodated in a container placed on a stage of the microscope, the follicular fluid including the egg and a cell other than the egg; and
a superimposition device configured to superimpose the auxiliary image generated by the image processing device on an optical image of the follicular fluid formed on an image surface on an optical path of the microscope,
wherein the image processing device includes:
an image analysis unit configured to perform image analysis including object detection of the egg from inside the follicular fluid on the captured image; and
an image generation unit configured to generate the auxiliary image based on a result of the image analysis.

20. (Amended) An egg testing support method comprising:
acquiring a captured image of a follicular fluid accommodated in a container placed on a stage of a microscope, the follicular fluid including an egg and a cell other than the egg;
performing image analysis including object detection of the egg from inside the follicular fluid on the captured image based on the acquired captured image;
generating an auxiliary image including information to determine a region where presence of the egg is estimated based on a result of the image analysis; and
superimposing the generated auxiliary image on an optical image of the follicular fluid formed on an image surface on an optical path of the microscope.
